(19) Europäisches Patentamt
European Patent Office
Office européen des brevets

(11) Veröffentlichungsnummer : **0 072 501**
**B1**

(12) # EUROPÄISCHE PATENTSCHRIFT

(45) Veröffentlichungstag der Patentschrift : **03.12.86**

(21) Anmeldenummer : **82107070.3**

(22) Anmeldetag : **05.08.82**

(51) Int. Cl.[4] : **C 09 B 55/00**// C09B45/16, D06P3/04, D06P1/10

(54) **Asymmetrische 1:2-Chromkomplexfarbstoffe.**

(30) Priorität : **17.08.81 DE 3132334**

(43) Veröffentlichungstag der Anmeldung : **23.02.83 Patentblatt 83/08**

(45) Bekanntmachung des Hinweises auf die Patenterteilung : **03.12.86 Patentblatt 86/49**

(84) Benannte Vertragsstaaten : **CH DE FR GB IT LI**

(56) Entgegenhaltungen :
**FR-A- 2 392 087**
**GB-A- 1 197 265**

(73) Patentinhaber : **BAYER AG**
**Konzernverwaltung RP Patentabteilung**
**D-5090 Leverkusen 1 Bayerwerk (DE)**

(72) Erfinder : **Mennicke, Winfried, Dr.**
**Steglitzer Strasse 8**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Chromkomplexfarbstoffe, die in Form der freien Säure der Formel

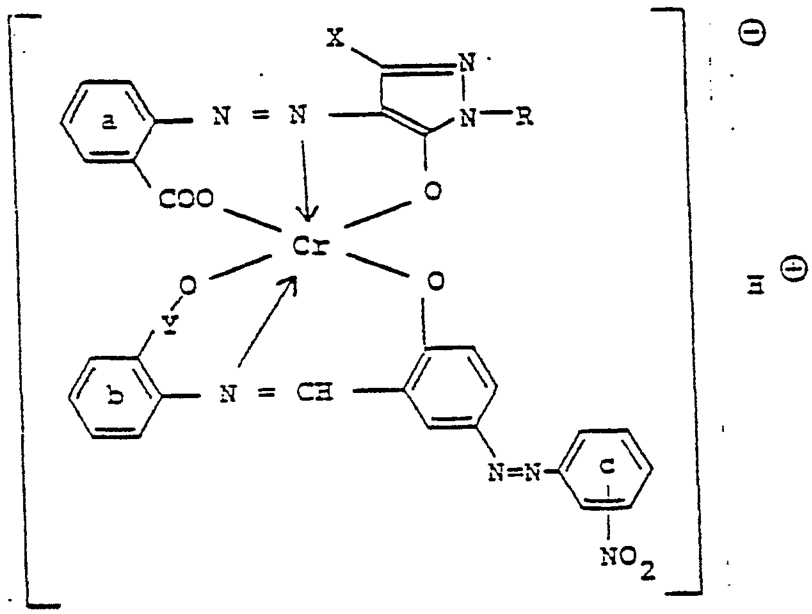

entsprechen worin

X = ggf. substituiertes Alkyl, Aryl oder Carbamoyl,

R = ggf. substituiertes Alkyl oder Aryl oder Wasserstoff,

Y = CO oder eine direkte Bindung bedeuten,

Ring a entweder durch $SO_3H$ oder durch $NO_2$,

Ring b durch $SO_3H$, COOH, Sulfamoyl, Carbamoyl, Alkylsulfonyl, Arylsulfonyl, $NO_2$, Alkyl, Alkoxy, Br, Cl oder Acylamino,

Ring c durch $SO_3H$, COOH, Sulfamoyl, Carbamoyl, Alkyl, Trifluormethyl, Alkoxy, Alkylsulfonyl, $NH_2$, $NO_2$, Cl oder Br substituiert sein können,

und wobei die Nitrogruppe des Ringes c in o- oder p-Stellung zur Azobrücke steht.

Bevorzugte Alkyl- und Alkoxygruppen sind solche mit 1-4 C-Atomen, die gegebenenfalls weiter substituiert sein können, beispielsweise durch CN, Cl, OH, $C_1$-$C_4$-Alkoxy, Phenyl. Besonders bevorzugt sind Methyl bzw. Methoxy.

Bevorzugte Acylaminogruppen sind insbesondere $C_1$-$C_4$-Alkylcarbonylamino, $C_1$-$C_4$-Alkoxycarbonylamino, $C_1$-$C_4$-Alkylsulfonylamino.

Die Sulfamoyl- und Carbamoylgruppen können mono- oder disubstituiert sein beispielsweise durch gegebenenfalls substituiertes $C_1$-$C_4$-Alkyl oder durch Aryl, insbesondere gegebenenfalls substituiertes Phenyl.

Bevorzugte Arylreste sind insbesondere gegebenenfalls substituierte Phenylreste mit Substituenten wie Halogen, insbesondere Cl und Br, $NO_2$, $C_1$-$C_4$-Alkoxy, $C_1$-$C_4$-Alkyl.

Bevorzugte Farbstoffe sind solche der Formeln

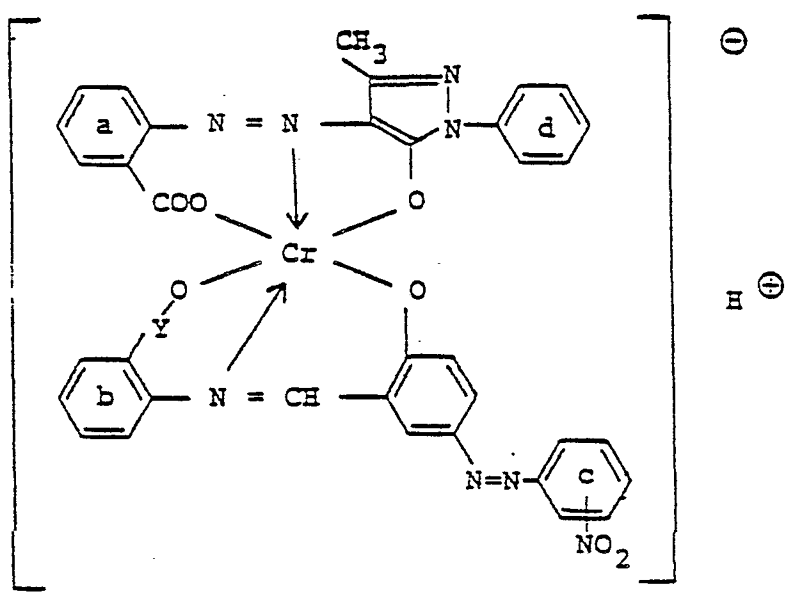

(II)

und

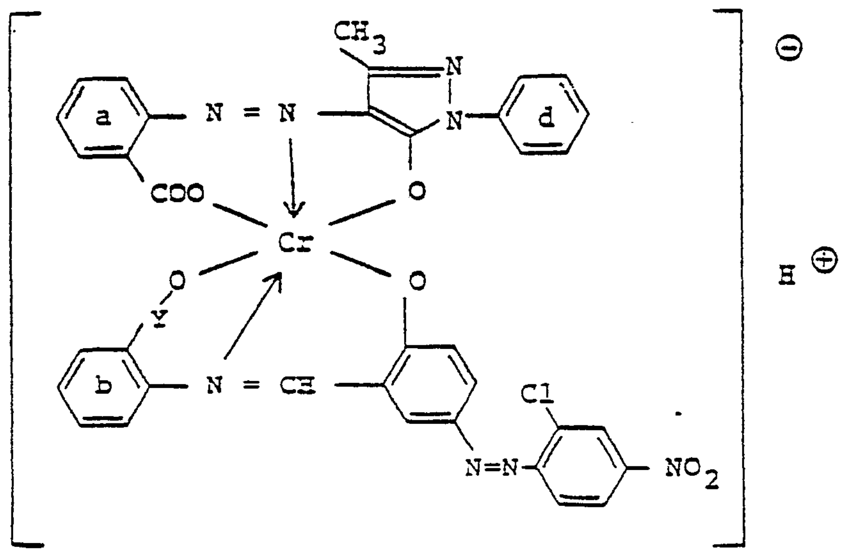

(III)

wobei

Y die obengenannte Bedeutung hat und
Ring a durch $SO_3H$ oder $NO_2$,
Ring b durch $SO_3H$, Sulfamoyl, Cl, $NO_2$ oder $CH_3$ und
Ring d durch $SO_3H$, Sulfamoyl, Cl, $CH_3$ oder $OCH_3$

substituiert sein können.

Bevorzugte Farbstoffe sind weiterhin solche der Formeln

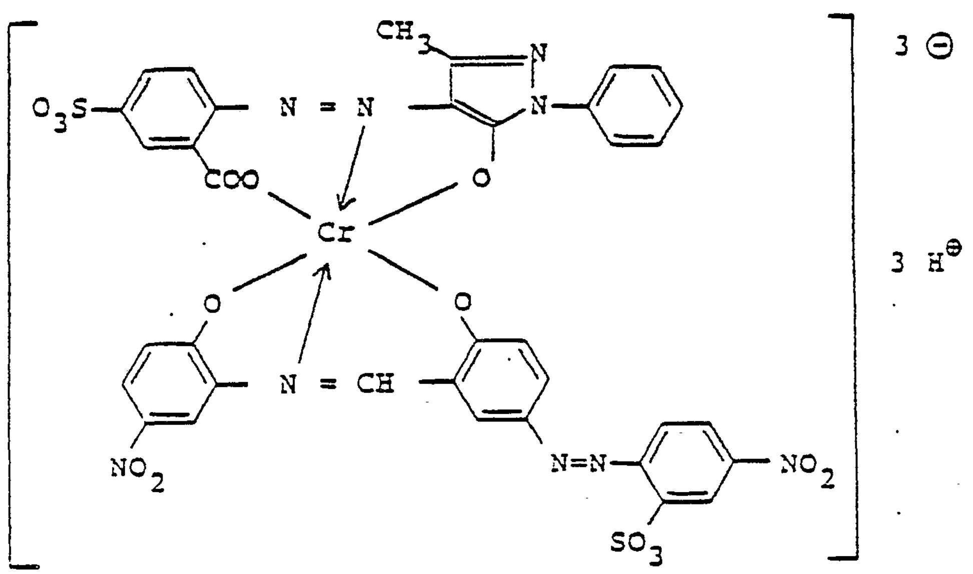

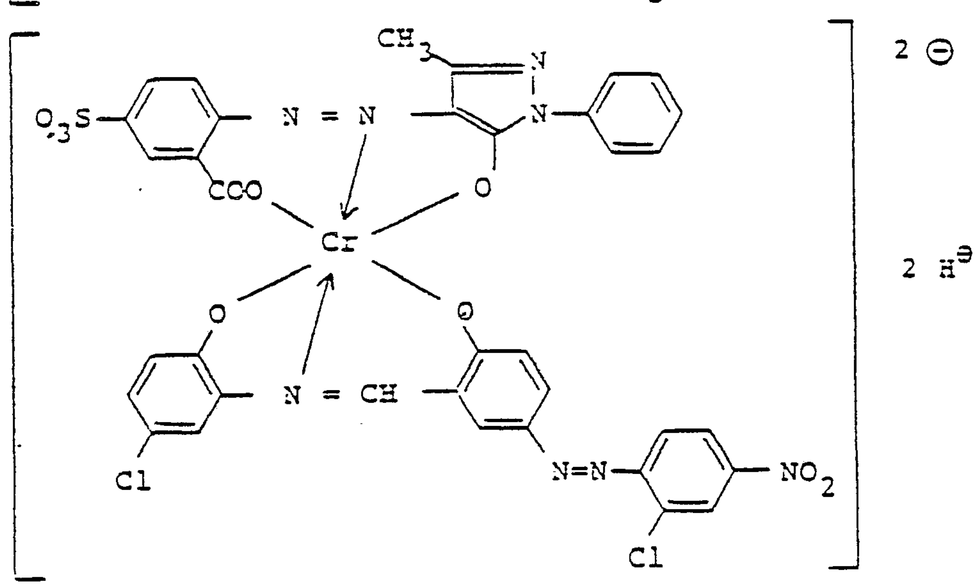

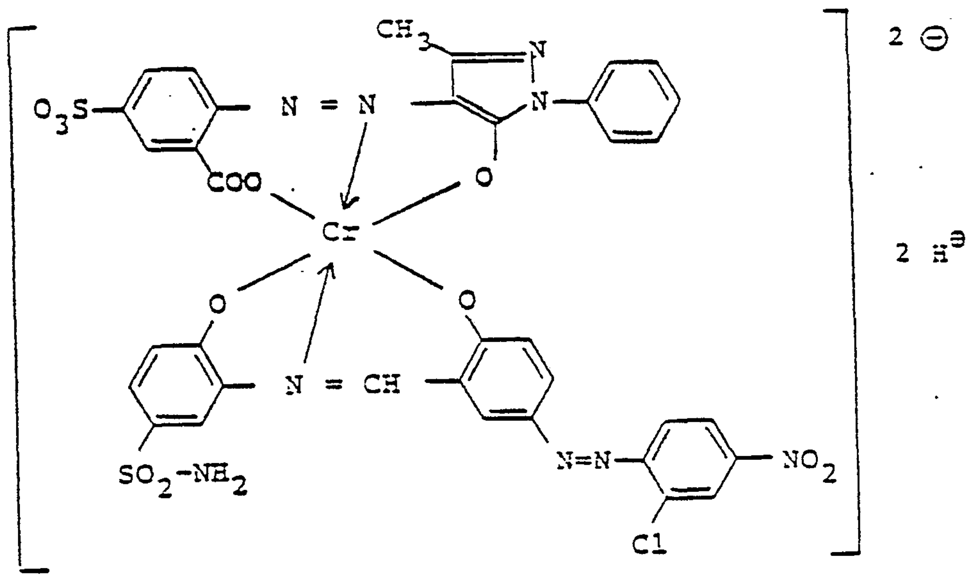

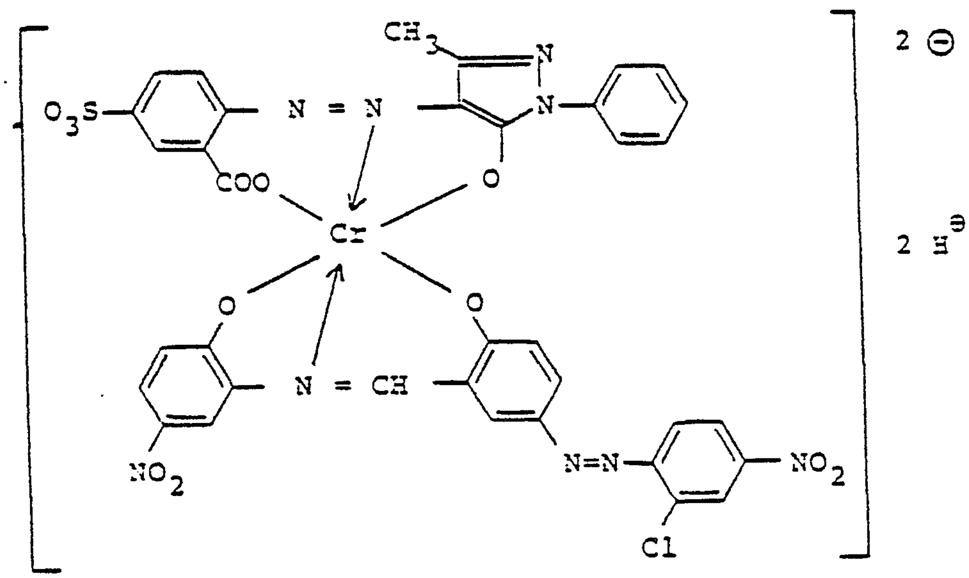

Die erfindungsgemäßen Farbstoffe werden in an sich bekannter Weise (vgl. z. B. DE-A 27 35 287, US-A 29 85 646 and GB-A 11 97 265) erhalten, indem man einen Farbstoff der Formel

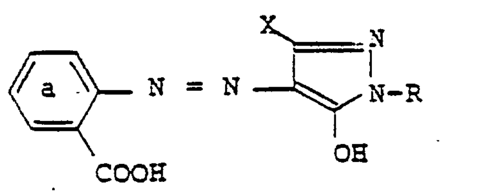

(IV)

oder

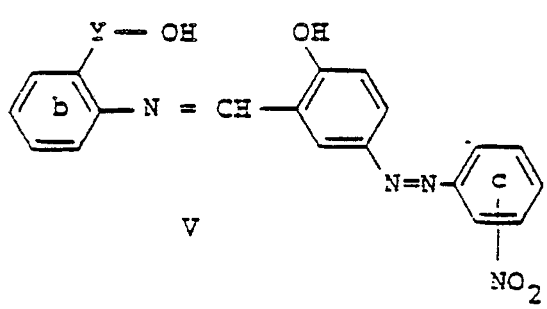

V

mit einem chromabgebenden Mittel in den 1 : 1-Chromkomplex überführt und diesen mit dem entsprechenden nichtmetallisierten Farbstoff der Formel (V) bzw. (IV) umsetzt.

Wegen ihrer leichten Zugänglichkeit können anstelle der Azomethine der Formel (V) auch Gemische aus Aminen der Formel

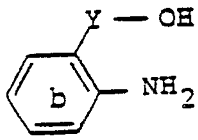

(VI)

und den Aldehyden der Formel

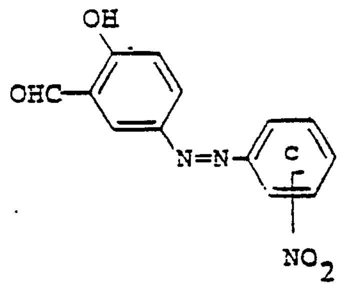

(VII)

eingesetzt werden.

Die Monoazofarbstoffe der Formel (IV) werden in bekannter Weise durch Kuppeln von diazotierten Aminen der Formel

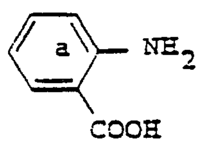

(VIII)

auf 5-Pyrazolone der Formel

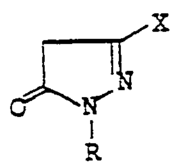

(IX)

erhalten, diejenigen der Formel (VII) durch Kuppeln von diazotierten o- und p-Nitroanilinen der Formel

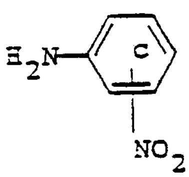

(X)

auf Salicylaldehyd.

Geeignete Diazoverbindungen der Formel (VIII) sind beispielsweise :
2-Aminobenzoesäure,
2-Aminobenzoesäure-4- oder -5-sulfonsäure,
4- oder 5-Nitro-2-aminobenzoesäure.

Geeignete 5-Pyrazolone der Formel (IX) sind beispielsweise :
1-Phenyl-3-methyl-5- pyrazolon,
1-Phenyl-3-aminocarbonyl-5-pyrazolon,
1,3-Diphenyl-5-pyrazolon,
3-Methyl-5-pyrazolon,
3-Phenyl-5-pyrazolon,
1,3-Dimethyl-5-pyrazolon,
1-Ethyl-3-methyl-5-pyrazolon,
1-2'-Hydroxyethyl-3-methyl-5-pyrazolon,
1-(2'-, 3'- oder 4'-Chlorphenyl)-3-methyl-5-pyrazolon,
1-(2'-, 3'- oder 4'-Bromphenyl)-3-methyl-5-pyrazolon,
1-(2'-, 3'- oder 4'-Methylphenyl)-3-methyl-5-pyrazolon,
1-(2'-, 3'- oder 4'-Methoxyphenyl)-3-methyl-5-pyrazolon,
1-(2'-, 3'- oder 4'-Nitrophenyl)-3-methyl-5-pyrazolon,
1-(3'-Cyanophenyl)-3-methyl-5-pyrazolon,
1-(2'-Ethylphenyl)-3-methyl-5-pyrazolon,
1-(3'-Acetaminophenyl)-3-methyl-5-pyrazolon,
1-(2',5'-Dichlorphenyl)-3-methyl-5-pyrazolon,
1-(2',4',6'-Trichlorphenyl)-3-methyl-5-pyrazolon,
1-(2',4'-Dichlor-5'-methylphenyl)-3-methyl-5-pyrazolon,
1-(2'-Chlor-6'-methylphenyl)-3-methyl-5-pyrazolon,
1-(2'-Methoxy-5'-methylphenyl)-3-methyl-5-pyrazolon,
1-(2'-Methyl-4'- oder -5'-chlorphenyl)-3-methyl-5-pyrazolon,
1-(2',5'-Dimethoxyphenyl)-3-methyl-5-pyrazolon,
1-Naphthyl-(1')-3-methyl-5-pyrazolon,
1-Naphthyl-(2')-3-methyl-5-pyrazolon,
1-(2'-, 3'- oder 4'-Sulfophenyl)-3-methyl-5-pyrazolon,
1-(Phenyl-2'-, -3'- oder -4'-sulfonamid)-3-methyl-5-pyrazolon,
1-(2'-, 3'- oder 4'-Sulfophenyl)-3-aminocarbonyl-5-pyrazolon,
1-(Phenyl-2'-, -3'- oder -4'-carbonsäure)-3-methyl-5-pyrazolon,
1-(2'-Chlor-4'- oder -5'-sulfophenyl)-3-methyl-5-pyrazolon,
1-(2',5'-Dichlor-4'-sulfophenyl)-3-methyl-5-pyrazolon,
1-(4'-Methyl-5'-chlor-2'-sulfophenyl)-3-methyl-5-pyrazolon,
1-(4'-Methyl-2'-sulfophenyl)-3-methyl-5-pyrazolon,
1-(4'-Nitro-2'-sulfophenyl)-3-methyl-5-pyrazolon,
1-(2'-Methyl-4'-sulfophenyl)-3-methyl-5-pyrazolon,
1-(2'-Chlor-6'-methyl-4'-sulfophenyl)-3-methyl-5-pyrazolon,
1-(4'-, 5'-, 6'-, 7'- oder 8'-Sulfonaphthyl-(1'))-3-methyl-5-pyrazolon,
1-(1'-, 5'-, 6'-, 7'- oder 8'-Sulfonaphthyl-(2'))-3-methyl-5-pyrazolon.

Beispiele für Amine der Formel (VI) sind alle Aminobenzoesäuren der Formel (VIII), 2-Amino-1-hydroxybenzol und dessen Derivate :
4- oder 5-Chlor-2-amino-1-hydroxybenzol,
4,6-Dichlor-2-amino-1-hydroxybenzol,
4- oder 5-Nitro-2-amino-1-hydroxybenzol,
4,6-Dinitro-2-amino-1-hydroxybenzol,
4-Chlor- und 4-Methyl- und 4-Acetamino-6-nitro-2-amino-1-hydroxybenzol,
6-Methyl-, 6-Acetamino- und 6-Chlor-4-nitro-2-amino-1-hydroxybenzol,
4-Chlor-5-nitro-2-amino-1-hydroxybenzol,
4- oder 5-Methyl-2-amino-1-hydroxybenzol,
4-Methoxy-2-amino-1-hydroxybenzol,
2-Amino-1-hydroxybenzol-4- oder -5-methylsulfon,
2-Amino-1-hydroxybenzol-4- oder -5-phenylsulfon,
2-Amino-1-hydroxybenzol-4-ethyl-, -4-chlormethyl- und -4-butylsulfon,
2-Amino-1-hydroxybenzol-4- oder -5-sulfonamid,
2-Amino-1-hydroxybenzol-4- oder -5-sulfomethylamid,
2-Amino-1-hydroxybenzol-4- oder -5-sulfodimethylamid,
2-Amino-1-hydroxybenzol-4- oder -5-sulfanilid,
4-Nitro-2-amino-1-hydroxybenzol-5- oder -6-sulfonamid,
2-Amino-1-hydroxybenzol-4-sulfanthranilid,
2-Amino-1-hydroxybenzol-4- oder -5-sulfonsäure,
4-Nitro-2-amino-1-hydroxybenzol-5- oder -6-sulfonsäure,
5-Nitro- oder 6-Nitro-2-amino-1-hydroxybenzol-4-sulfonsäure,
6-Chlor-2-amino-1-hydroxybenzol-4-sulfonsäure,
4-Chlor-2-amino-1-hydroxybenzol-6-sulfonsäure,

4-Methyl-2-amino-1-hydroxybenzol-5- oder -6-sulfonsäure.

Geeignete o- und p-Nitroaniline der Formel (X) sind 4-Nitroanilin, 2-Chlor-4-nitroanilin, 3-Chlor-4-nitroanilin, 2-Chlor-4-nitro-5-methoxyanilin, 2-Methoxy-4-nitro-5-chloranilin, 2,5-Dichlor-4-nitroanilin, 2,6-Dichlor-4-nitroanilin, 2-Chlor-4-nitro-6-methoxyanilin, 2-Methyl-4-nitro-5-chloranilin, 2-Methyl-4-nitroanilin, 2-Brom-4-nitroanilin, 2-Methylsulfonyl-4-nitroanilin, 4-Nitroanilin-2-carbonsäure, 4-Nitroanilin-3-carbonsäure, 2-Methoxy-4-nitroanilin, 2,5-Dimethoxy-4-nitroanilin, 2,5-Diethoxy-4-nitroanilin, 4-Nitroanilin-2-sulfonsäure, 4-Nitroanilin-3-sulfonsäure, 2-Methoxy-4-nitroanilin-5-sulfonsäure, 2-Methoxy-4-nitroanilin-6-sulfonsäure, 4-Nitroanilin-2-sulfonamid, 2,4-Dinitroanilin, 3-Amino-4-nitroanilin, 2,4-Dinitroanilin-6-sulfonsäure, 2,6-Dinitroanilin-4-sulfonsäure, 4-Trifluormethyl-2-nitroanilin, 2-Nitro-4-chloranilin, 2-Nitro-4-methylanilin, 2-Nitro-4-methoxy-anilin, 2-Nitroanilin-4-carbonsäure, 2-Nitroanilin-4-sulfonsäure, 2-Nitro-5-chloranilin, 2-Nitro-6-methylanilin, 2-Nitro-4,6-dichloranilin, 2-Nitro-4,6-dimethylanilin.

Die Überführung der Azofarbstoffe der Formel (IV) oder der Azomethinfarbstoffe der Formel (V) in den Chrom-1 : 1-Komplex erfolgt nach üblichen, an sich bekannten Methoden, indem man z. B. den metallfreien Farbstoff mit einem Salz des 3-wertigen Chroms, wie Chromchlorid, Chromfluorid, Chromsulfat oder Chromformiat im wäßrigen Medium bei Siedetemperatur oder gegebenenfalls höherer Temperatur umsetzt. Man kann die Metallisierung auch in Gegenwart von organischen Lösungsmitteln oder in organischen Lösungsmitteln allein vornehmen, beispielsweise in Alkoholen, Etheralkoholen oder Ketonen. Besonders glatt verläuft die Reaktion unter Ausschluß von Wasser, indem man beispielsweise nach dem Verfahren der Deutschen Offenlegungsschrift 26 05 574 das Reaktionswasser während der Chromierung in Etheralkoholen destillativ entfernt.

Die Umsetzung der Chrom-1 : 1-Komplexe der Farbstoffe der Formel (IV) oder (V) mit den metallfreien Farbstoffen der Formel (V) bzw. (IV) oder die Umsetzung der von den Azofarbstoffen der Formel (IV) abgeleiteten Chrom-1 : 1-Komplexe mit Gemischen aus den Aminen der Formel (VI) und den Aldehyden der Formel (VII) erfolgt zweckmäßig in alkalischem bis schwach saurem Medium bei gewöhnlicher oder erhöhter Temperatur, vorzugsweise im Bereich von 50-100 °C. Auch hier kann die Umsetzung in wäßriger Lösung in Gegenwart eines Lösungsmittels oder in einem Lösungsmittel allein durchgeführt werden, wobei niedere Alkohole, wie Ethanol, Ketone, wie Ethylmethylketon, Glykole, Etheralkohole, wie Ethyl- oder Butylglykol, und Carbonamide, wie Formamid oder Dimethylformamid, in Frage kommen. Die Reaktionsteilnehmer werden bevorzugt in stöchiometrischen Mengen eingesetzt; ein Überschuß an metallhaltigem Farbstoff wirkt sich im allgemeinen weniger nachteilig aus als ein Überschuß an metallfreiem Farbstoff.

Die bei der Anlagerung des metallfreien an den metallhaltigen Farbstoff freiwerdende Säure wird durch Zusatz alkalisch wirkender Mittel abgefangen, beispielsweise durch Zusatz von Hydroxiden oder Carbonaten von Alkalimetallen, wie Lithium-, Natrium-, Kaliumhydroxid oder -carbonat, von Ammoniak oder organischen Aminen, wie Mono-, Di-, Triethylamin, Mono-, Di- oder Triethanolamin, oder von Tetraalkylammoniumhydroxiden, wie Tetramethylammoniumhydroxid. Vorzugsweise setzt man die alkalisch wirkenden Mittel so zu, daß die Reaktion bei einem konstanten pH-Wert abläuft.

Am Ende der Reaktion liegen die erfindungsgemäßen 1 : 2-Chromkomplexfarbstoffe als Salz der Komplexsäure und der an ihr gebundenen $SO_3H$-Gruppen mit den oben erwähnten alkalisch wirkenden Mitteln vor, beispielsweise als Alkalisalze bei Verwendung von Alkalihydroxiden oder -carbonaten oder als Ammoniumsalze bei Verwendung von Ammoniak oder Aminen. Zur Neutralisation können auch Amine Verwendung finden, die mit den 1 : 2-Chromkomplexfarbstoffen in Wasser schwer lösliche Salze bilden, so daß sie nur unter Zusatz von organischen Lösungsmitteln oder in diesen Lösungsmitteln allein gelöst werden können. Derartige Amine sind beispielsweise N-Ethyl-N-hexylamin, Dodecylamin, Oleylamin, Cyclohexylamin, N,N-Dicyclohexylamin, N,N'-Diphenylguanidin oder N,N'-Ditolylguanidin.

Die so hergestellten 1 : 2-Chromkomplexe, die in der sauren Form den Farbstoffen der Formel (I) entsprechen, können durch Ansäuern, Aussalzen mit Alkalisalzen oder Eindampfen isoliert und mit den üblichen Hilfs- und Stellmitteln zu wasserlöslichen Präparationen verarbeitet werden, sei es zu Pulvern, zu Granulaten mit einer Korngröße von mindestens 20µ oder zu kaltwasserlöslichen und kaltdispergierbaren Zubereitungen.

Die Zubereitung zu flüssigen Präparationen unter Verwendung von organischen Lösungsmitteln gegebenenfalls im Gemisch mit Wasser und gegebenenfalls unter Zusatz von Lösungsvermittlern, wie beispielsweise Harnstoff, ist ebenfalls möglich und insofern empfehlenswert, als man die Synthese der 1 : 2-Chromkomplexe oder einen Teil dieser Synthese und die Herstellung der Farbstofflösungen in einem Topf ohne Zwischenisolierungen vollziehen kann. Besonders vorteilhaft ist das Verfahren der Deutschen Offenlegungsschrift 2 443 483, bei dem man u. a. den metallfreien Farbstoff in hydroxylgruppenhaltigen Lösungsmitteln in Gegenwart von alkalisch wirkenden Lithiumsalzen an den metallhaltigen Farbstoff anlagert und dabei gleichzeitig largerstabile konzentrierte Farbstofflösungen erhält. Flüssige Farbstoffzubereitungen sind auch durch Flüssig-Flüssig-Extraktionen möglich, indem man, wie beispielsweise in der Europäischen Patentveröffentlichung 24 609 beschrieben, in einer Lösung aus Wasser und einem Etheralkohol durch Zusatz von anorganischen Salzen eine Phasentrennung durchführt und die den organischen Farbstoff enthaltende Phase abtrennt.

Die 1 : 2-Chromkomplexe der Formel (I), die aufgrund der enthaltenen Kationen in Wasser schwer und in organischen Lösungsmitteln gut löslich sind, können zum Färben von organischen Flüssigkeiten, Harzen oder Lakken, von Holzbeizen oder Kugelschreibertinten verwendet werden.

Die 1 : 2-Chromkomplexe der Formel (I), die aufgrund der enthaltenen Kationen in Wasser gut löslich sind, eignen sich zum Färben und Bedrucken der verschiedensten Stoffe, vor allem zum Färben von natürlichen oder synthetischen stickstoffhaltigen Materialien, wie Wolle, Seide, Leder, Polyamid- und Polyurethanfaser. Sie sind vor allem zum Färben aus schwach alkalischem, neutralem oder schwach saurem, z. B. essigsaurem, Bade geeignet. Man erhält gleichmäßige Färbungen in meist goldgelben bis orangefarbenen und orangebraunen Nuancen mit guten Licht- und Gebrauchsechtheiten.

Die Farbstoffe, die keine $SO_3H$-Gruppe enthalten und im allgemeinen schwer wasserlöslich sind, lassen sich in Form einer flüssigen Zubereitung bevorzugt zum Sprühfärben von Leder verwenden.

Die flüssigen Farbstoffzubereitungen von Farbstoffen mit einer $SO_3H$-Gruppe eignen sich ebenfalls zum Sprühfärben von Leder und zum Färben von Leder im Faß. Sie eignen sich besonders zum Färben von Leder auf Durchlauf-Mehrzweckmaschinen beispielsweise vom Typ MULTIMA, ein Verfahren, bei dem sich die erfindungsgemäßen Farbstoffe durch ein gutes Durchfärbevermögen, eine gute Bindung zum Substrat und eine gute Wassertropfenechtheit auszeichnen.

Beispiel 1

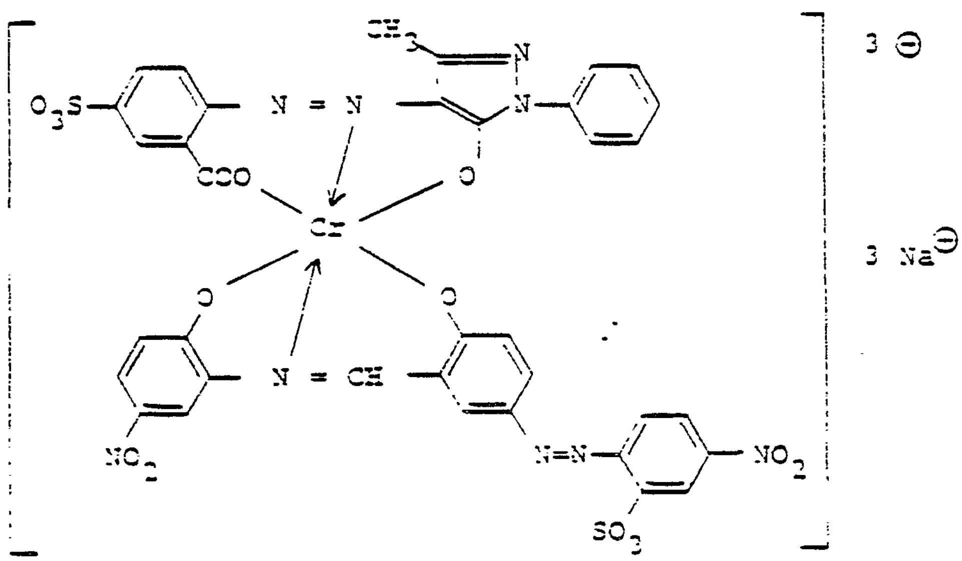

40,2 g des Monoazofarbstoffes aus diazotierter 2-Aminobenzoesäure-5-sulfonsäure und 1-Phenyl-3-methyl-5-pyrazolon werden, in 600 ml Wasser gelöst, mit 26,65 g $CrCl_3 \cdot 6H_2O$ versetzt und in einem Druckgefäß 8 Stunden lang auf 140 °C erhitzt. Man läßt die Suspension des gebildeten Chrom-1 : 1-Komplexes auf 80 °C abkühlen und setzt 15,4 g 4-Nitro-2-amino-1-hydroxybenzol zu. Man trägt dann 35,1 g Monoazofarbstoff aus Salicylaldehyd und diazotierter 4-Nitroanilin-2-sulfonsäure ein und läßt gleichzeitig ca. 60 ml 40 %iger Natronlauge so zutropfen, daß sich der pH im Bereich von 6 bis 7 bewegt. Die Temperatur wird weiterhin auf 80 °C gehalten. Nach einer knappen Stunde, wenn keine Natronlauge mehr verbraucht wird, ist die Anlagerung des Azomethins an den Chrom-1 : 1-Komplex beendet. Der entstandene asymmetrische Chrom-1 : 2-Komplex wird mit Natriumchlorid gefällt, abfiltriert und getrocknet. Er stellt ein rötlich braunes Pulver dar, welches Leder, Wolle und Polyamid in rotstichig goldgelben Tönen von guten Echtheiten färbt.

(Siehe Beispiel 2 Seite 9 f.)

40,2 g des Kupplungsproduktes aus diazotierter 2-Aminobenzoesäure-5-sulfonsäure und 1-Phenyl-3-methyl-5-pyrazolon werden mit 26,65 g $CrCl_3 \cdot 6H_2O$ durch 4-stündiges Erhitzen in 400 ml Ethylenglykolmonoethylether bei 125 °C in den Chrom-1 : 1-Komplex umgewandelt. Nach Abkühlen auf 80 °C werden 14,3 g 4-Chlor-2-amino-1-hydroxybenzol und 30,6 g Kupplungsprodukt aus diazotiertem 2-Chlor-4-nitroanilin und Salicylaldehyd zugesetzt. Man hält die Temperatur weiterhin auf 80 °C und läßt insgesamt ca. 60 ml 40 %iger Natronlauge bei einem pH bis zu 7 zulaufen. Nach etwa einer halben Stunde, wenn der pH ohne Zugabe von Natronlauge konstant bleibt, sind die Reaktionspartner zum Chrommischkomplex vereinigt. Dieser wird durch Austragen auf eine gesättigte Kochsalzlösung gefällt. Durch Absaugen und Trocknen erhält man ein rotbraunes Pulver, welches Leder, Wolle und Polyamid in lichtechten orangebraunen Tönen färbt.

(Siehe Beispiel 3 Seite 9 f.)

Beispiel 2

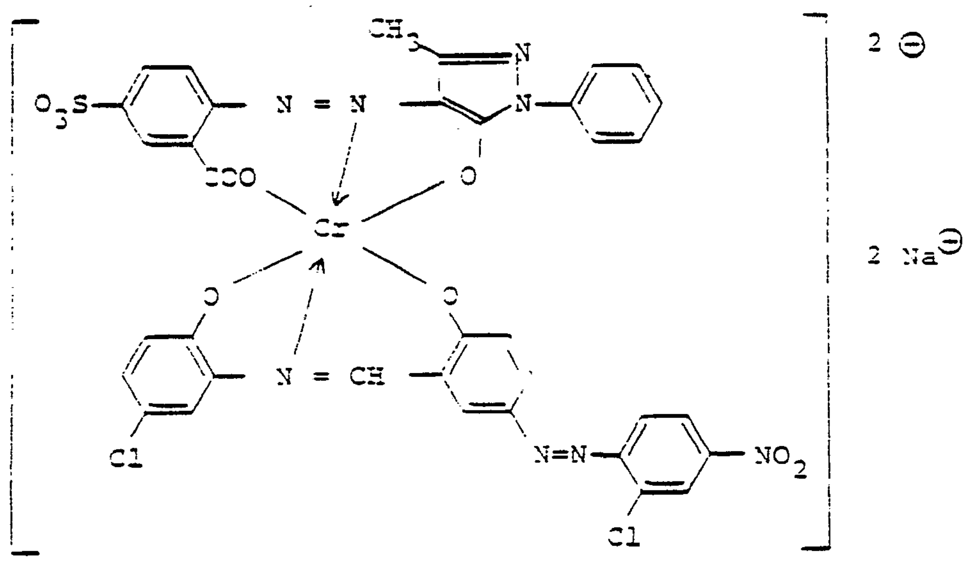

Beispiel 3

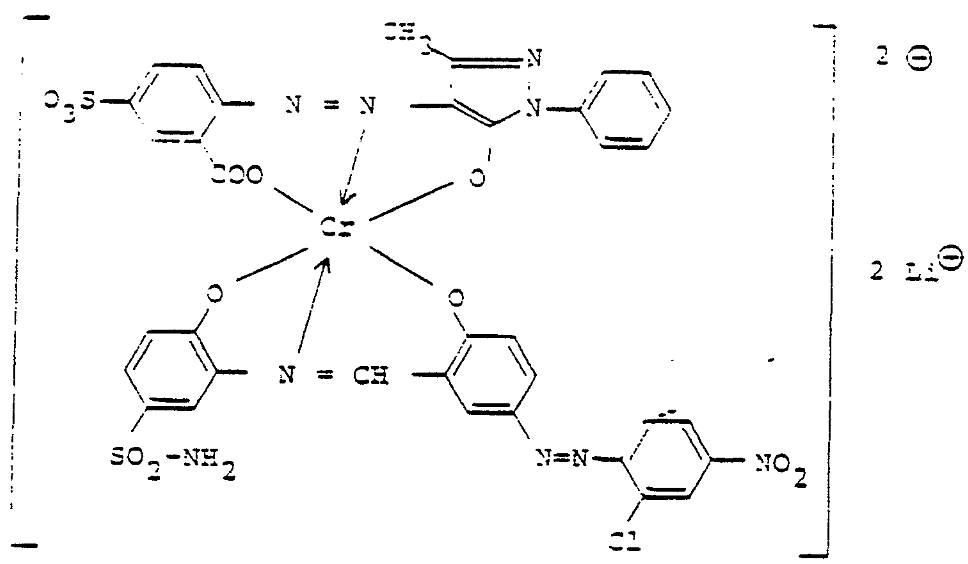

40,2 g des Kupplungsproduktes aus diazotierter 2-Aminobenzoesäure-5-sulfonsäure und 1-Phenyl-3-methyl-5-pyrazolon werden zusammen mit 26,65 g $CrCl_3 \cdot 6H_2O$ in 600 ml Wasser 8 Stunden lang auf 140 °C erhitzt. Es bildet sich eine Suspension, die auf Raumtemperatur abgekühlt wird. Der ausgefallene Chrom-1 : 1-Komplex wird abgesaugt und in 600 ml Ethylenglykolmonoethylether eingetragen. Man fügt 18,8 g 2-Amino-1-hydroxybenzol-4-sulfonamid und 30,6 g Monoazofarbstoff aus diazotiertem 2-Chlor-4-nitroanilin und Salicylaldehyd hinzu, erwärmt auf 80 °C und hält den pH durch portionsweise Zugabe von ca. 12 g $LiOH \cdot H_2O$ im Bereich von 6 bis 7. Kurz nachdem 80 °C erreicht sind, ist die Umsetzung zum Chrommischkomplex beendet. Man läßt auf Raumtemperatur abkühlen, filtriert von geringen Salzrückständen ab und erhält eine lagerstabile Farbstofflösung, mit der man auf Durchlauf-Mehrzweckmaschinen, im Faß oder durch Versprühen orangefarbene Lederfärbungen mit guter Farbstoffbindung erzielen kann.

Beispiel 4

Ersetzt man in Beispiel 2 die 14,3 g 4-Chlor-2-amino-1-hydroxybenzol gegen 15,4 g 4-Nitro-2-amino-1-hydroxybenzol, so bildet sich der folgende Chrommischkomplex :

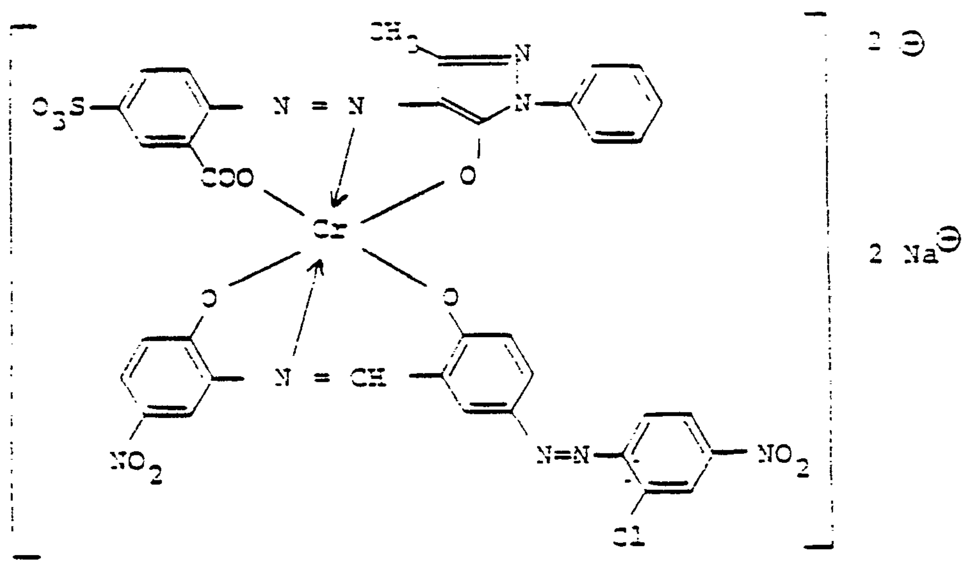

Er stellt ein rotbraunes Pulver dar, das Leder, Wolle und Polyamid in rotstichig goldgelben Tönen färbt.

Beispiel 5

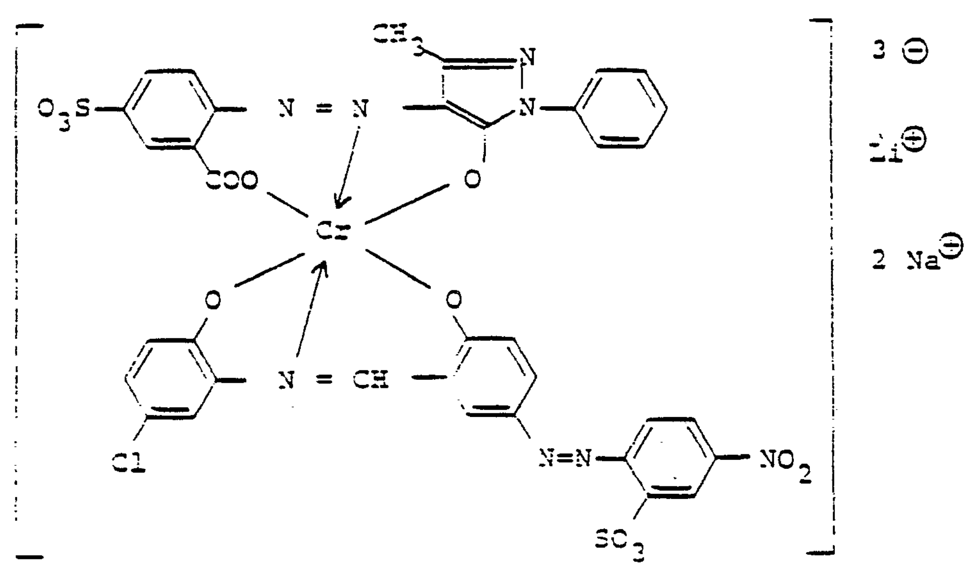

Kombiniert man den Chrom-1 : 1-Komplex des Beispiels 3 mit 14,3 g 4-Chlor-2-amino-1-hydroxybenzol und 35,1 g des Kupplungsproduktes aus diazotierter 4-Nitroanilin-2-sulfonsäure und Salicylaldehyd in 500 ml Ethylenglykolmonoethylether in Gegenwart von 4,2 g $LiOH \cdot H_2O$ und ca. 30 ml 40 %iger Natronlauge, so erhält man eine konzentrierte, lagerstabile Farbstofflösung, welche beim Versprühen auf Leder echte orangefarbene Färbungen liefert.

(Siehe Beispiel 6 Seite 11 f.)

Beispiel 6

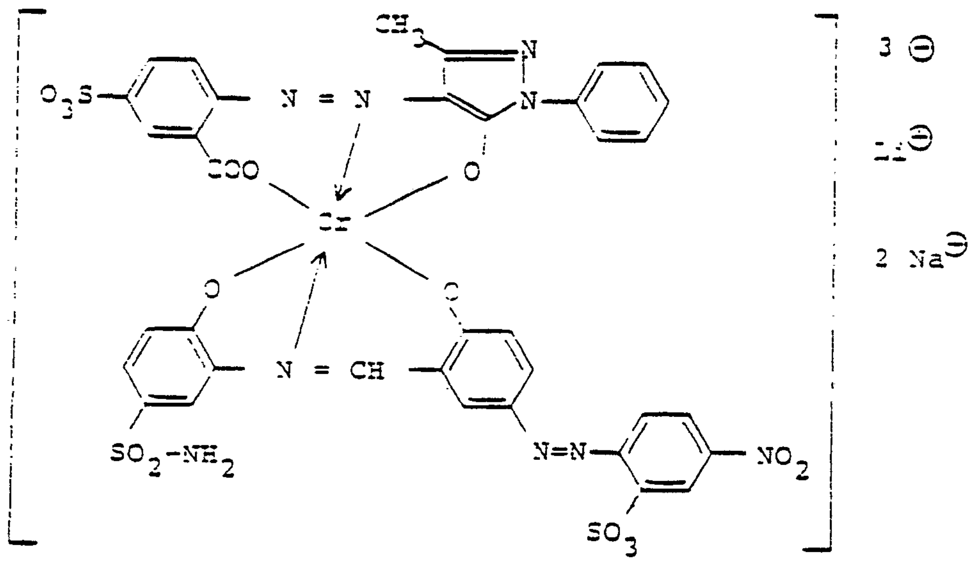

Ersetzt man die 14,3 g 4-Chlor-2-amino-1-hydroxybenzol des Beispiel 5 gegen 18,8 g 2-Amino-1-hydroxybenzol-4-sulfonamid, so gewinnt man ebenfalls eine konzentrierte lagerstabile Farbstofflösung, mit der man auf Leder, Wolle und Polyamid orangefarbene Färbungen mit guten Echtheiten erzielen kann.

Beispiel 7

Ersetzt man in Beispiel 1 die 4-Nitroanilin-2-sulfonsäure gegen andere o- oder p-nitrosubstituierte Aniline und das 4-Nitro-2-amino-1-hydroxybenzol gegen andere Aniline mit o-ständiger Hydroxyl- oder Carboxylgruppe, so gelangt man zu den asymmetrischen 1 : 2-Chromkomplexen der Formel (XI). Es sind hellbraune Pulver, die auf Leder, Wolle und Polyamid goldgelbe bis orangefarbene Färbungen mit guten Licht- und Gebrauchsechtheiten liefern.

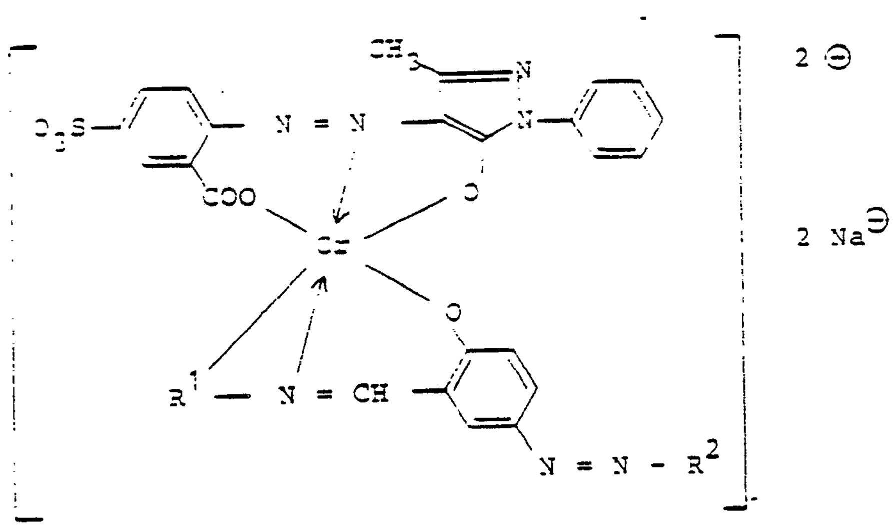

(XI)

$-R^1-$ = 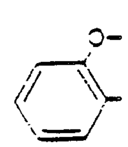 , 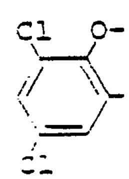

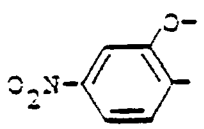 , 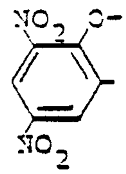 , 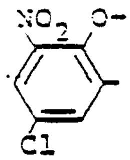 ,

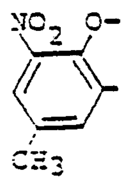 , 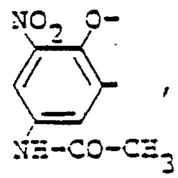 , 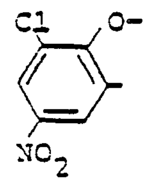 ,

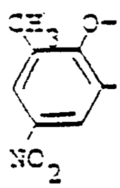 , 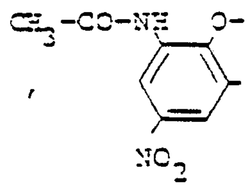 , 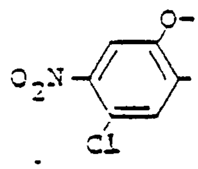 ,

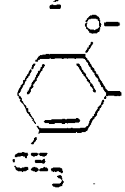 , 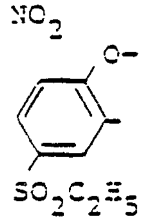 , 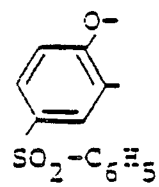 ,

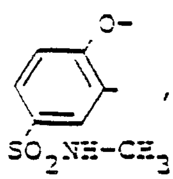 , 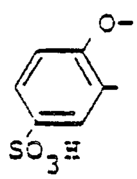 ,

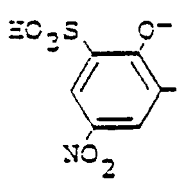 , 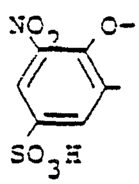 , 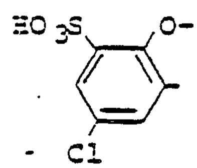 ,

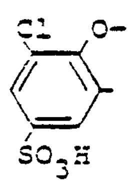 , 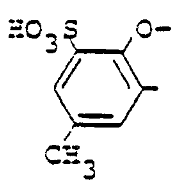 , 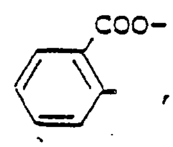 ,

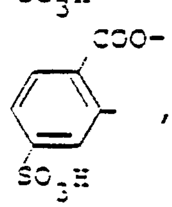 , 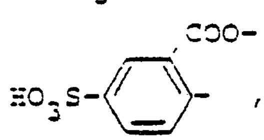 , 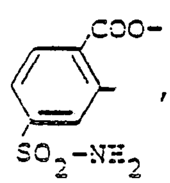 ,

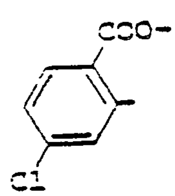 , 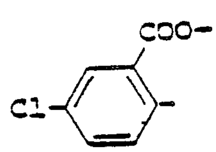 , 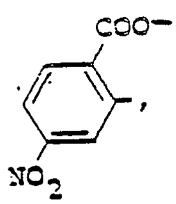

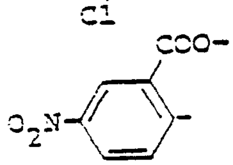 , 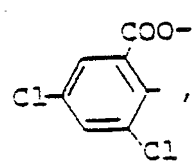 , 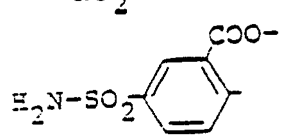 .

$-R^2$ = 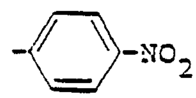 , 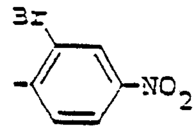 , 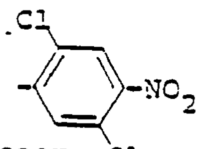 ,

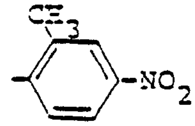 , 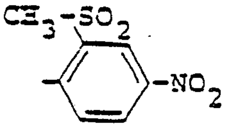 , 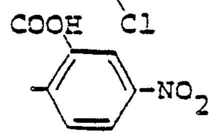 ,

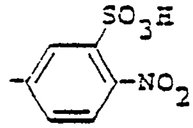 , 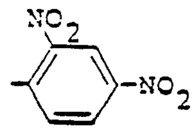 , 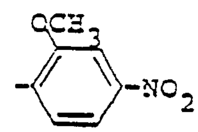 ,

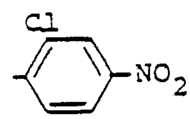 , 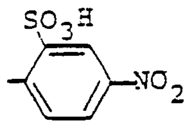 ,

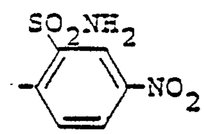 , 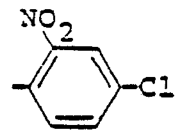 , 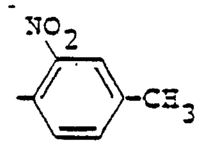 ,

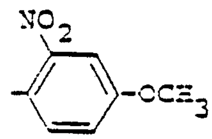 , 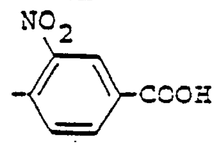 , 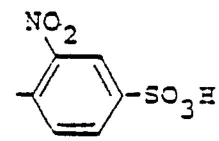 ,

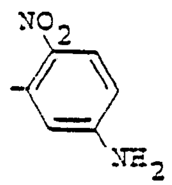 .

Beispiel 8

Tauscht man in Beispiel 1 die 4-Nitroanilin-2-sulfonsäure gegen die Nitroaniline des Beispiels 7, das 4-Nitro-2-amino-1-hydroxybenzol gegen andere hydroxyl- oder carboxylgruppenhaltige Aminobenzole und die 2-Aminobenzoesäure-5-sulfonsäure gegen andere Anthranilsäuren aus, so erhält man die Chrommischkomplexe der Formel

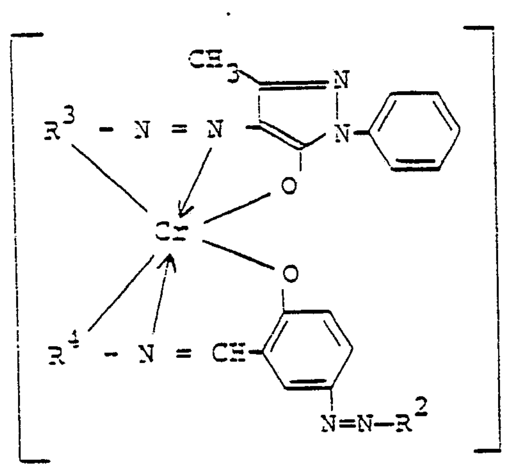

(XII)

worin
$-R^2$ = $-R^2$ des Beispiels 7

$-R^3- =$

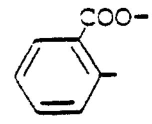,

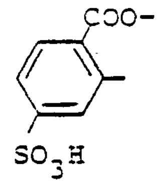

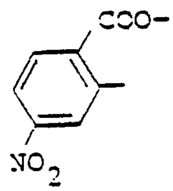,

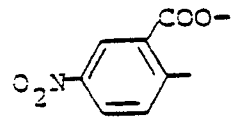

$—R^4— = —R^1—$ des Beispiels 7 und

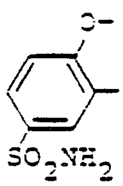,

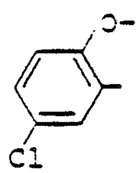,

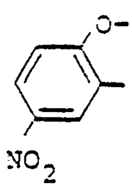

Die Farbstoffe stellen nach dem Isolieren und Trocknen hellbraune Pulver dar, welche Leder, Wolle und Polyamid in goldgelben bis orangefarbenen lichtechten Tönen färben.

Beispiel 9

Durch Austausch der in Beispiel 1 aufgeführten Ausgangsprodukte gegen die entsprechende Menge anderer Aminobenzole und Pyrazolone gelangt man zu den asymmetrischen 1 : 2-Chromkomplexen der Formel

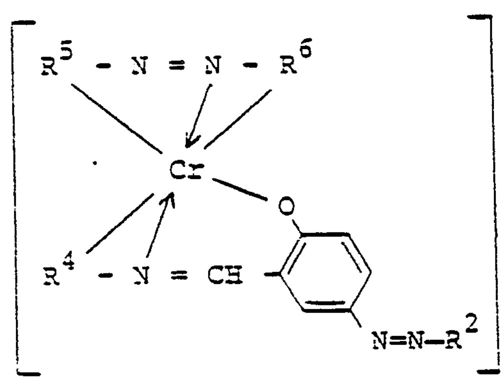

(-)

Kation

worin

Kation = $Li^+$, $Na^+$

$—R^2 = —R^2$ des Beispiels 7

$—R^4— = —R^4—$ des Beispiels 8

$—R^5— = —R^3—$ des Beispiels 8 und

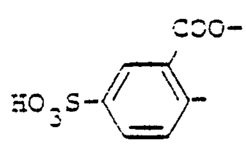

$-R^6-$ = 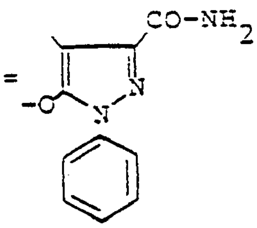 , 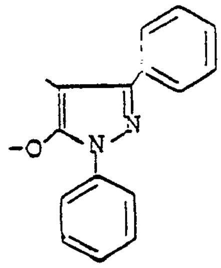 , 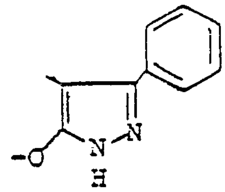 ,

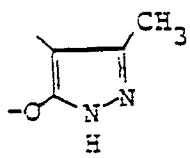 , 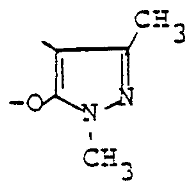 , 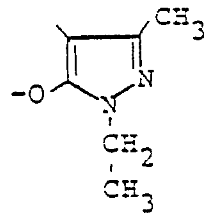 ,

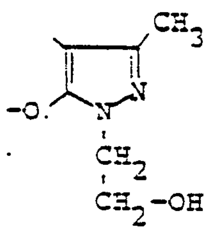 , 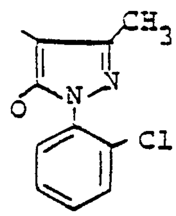 , 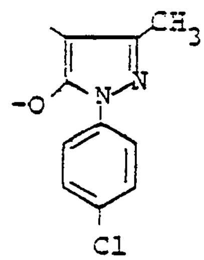 ,

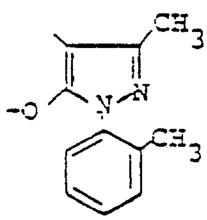 , 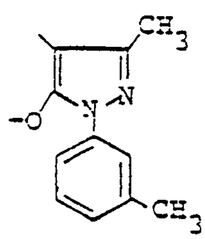 , 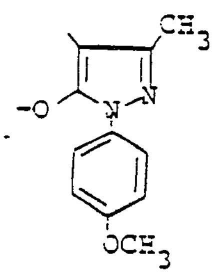 ,

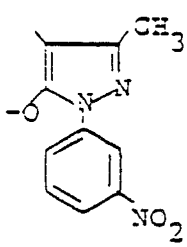 , 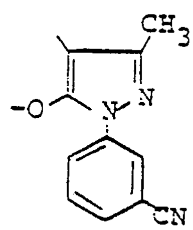 , 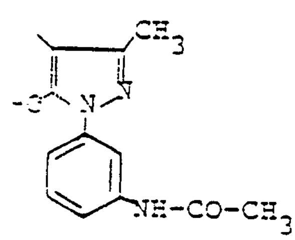 ,

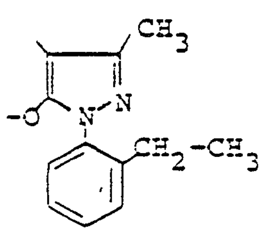 , 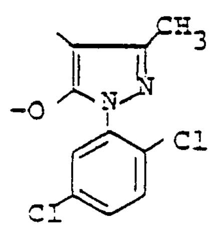 , 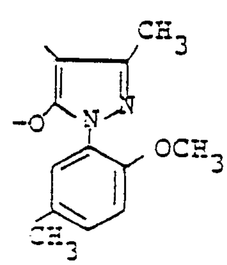 ,

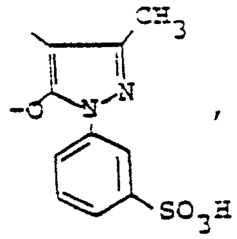 ,
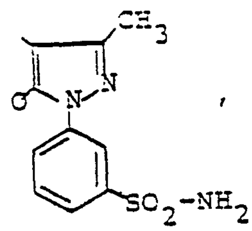 ,
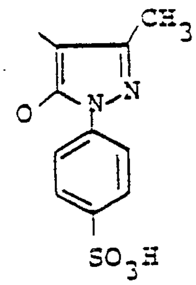 ,

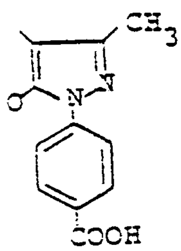 ,
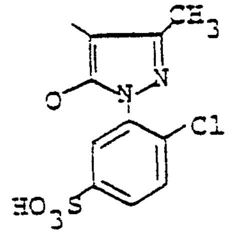 ,
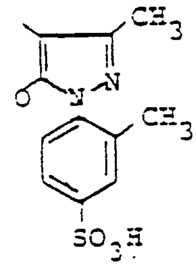 ,

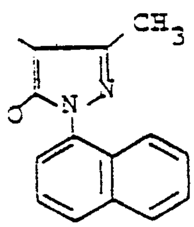 ,
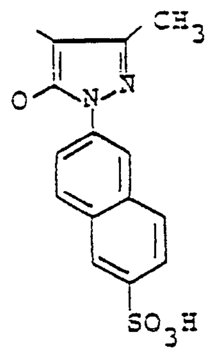 ,
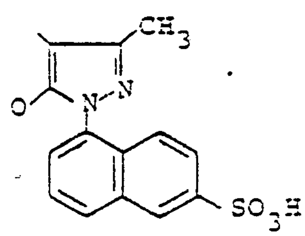 .

Die Lithiumsalze dieser Chrommischkomplexfarbstoffe bilden in Ethylenglykolmonoethylether und anderen Etheralkoholen beständige Lösungen, die sich zum Färben von Leder im Faß oder auf Durchlauf-Mehrzweckmaschinen eignen.

Die getrockneten Natriumsalze sind hellbraune Pulver, mit denen man auf Leder, Wolle und Polyamid goldgelbe bis orangefarbene echte Färbungen erzielen kann.

**Patentansprüche**

1. Chromkomplexfarbstoffe, die in Form der freien Säure der Formel

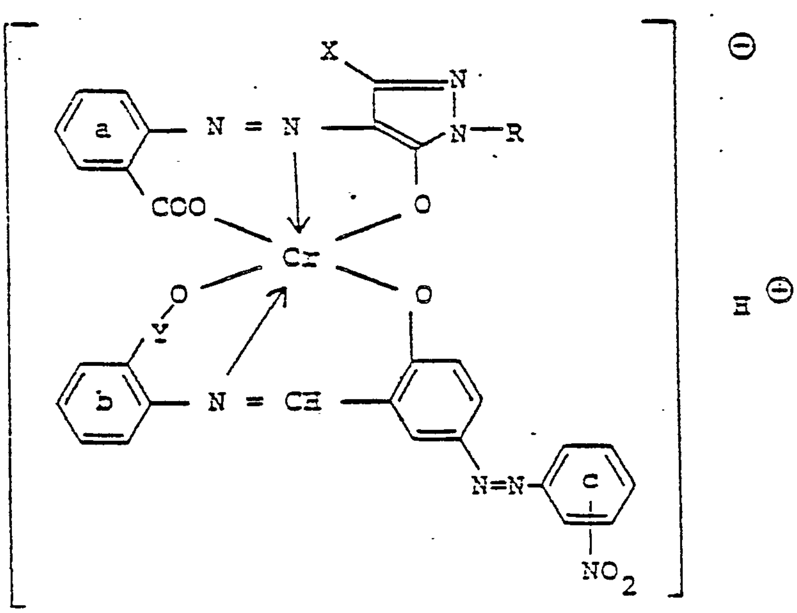

entsprechen worin

X = ggf. substituiertes Alkyl, Aryl oder Carbamoyl,

R = ggf. substituiertes Alkyl oder Aryl oder Wasserstoff,

Y CO oder eine direkte Bindung bedeuten,

Ring a entweder durch $SO_3H$ oder durch $NO_2$,

Ring b durch $SO_3H$, COOH, Sulfamoyl, Carbamoyl, Alkylsulfonyl, Arylsulfonyl, $NO_2$, Alkyl, Alkoxy, Br, Cl oder Acylamino,

Ring c durch $SO_3H$, COOH, Sulfamoyl, Carbamoyl, Alkyl, Trifluormethyl, Alkkoxy, Alkylsulfonyl, $NH_2$, $NO_2$, Cl oder Br substituiert sein können,

und wobei die Nitrogruppe des Ringes c in o- oder p-Stellung zur Azobrücke steht.

2. Farbstoffe gemäß Anspruch 1 der Formel

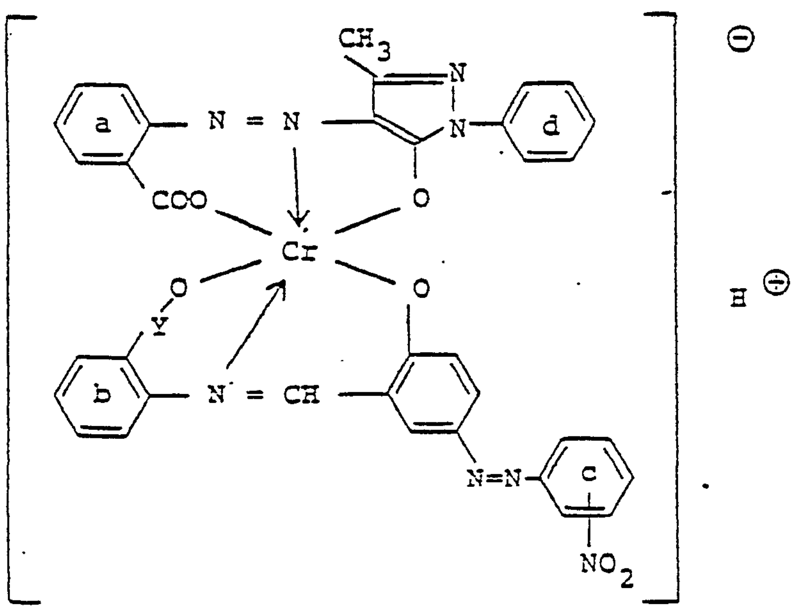

worin

Y die in Anspruch 1 genannte Bedeutung hat und

Ring a entweder durch $SO_3H$ oder durch $NO_2$,

Ring b durch $SO_3H$, Sulfamoyl, Cl, $NO_2$ oder $CH_3$ und

Ring d durch $SO_3H$, Sulfamoyl, Cl, $CH_3$ oder $OCH_3$ substituiert sein können.

3. Farbstoffe gemäß Anspruch 1 der Formel

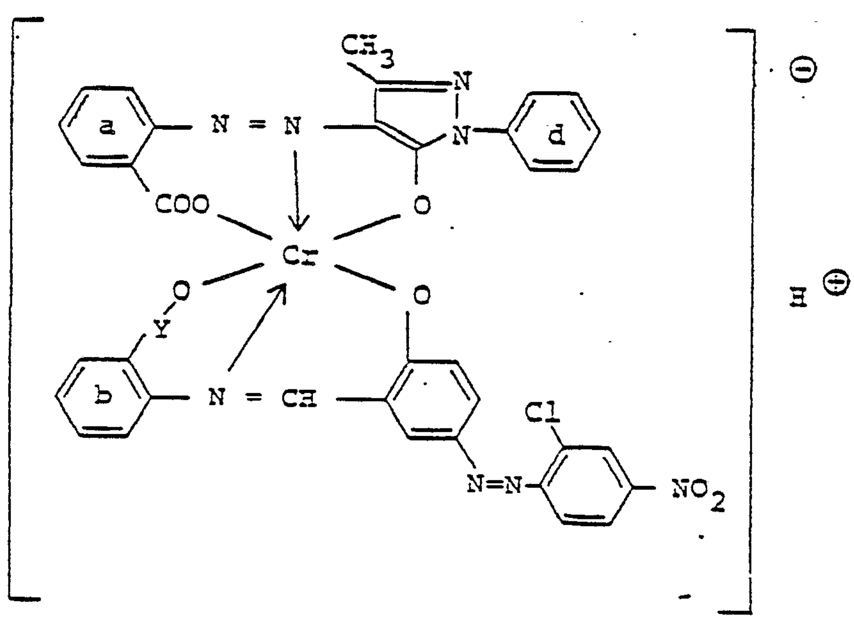

worin die Ringe a, b und d wie in Anspruch 2 angegeben substituiert sein können.

4. Farbstoff gemäß Anspruch 1 der Formel

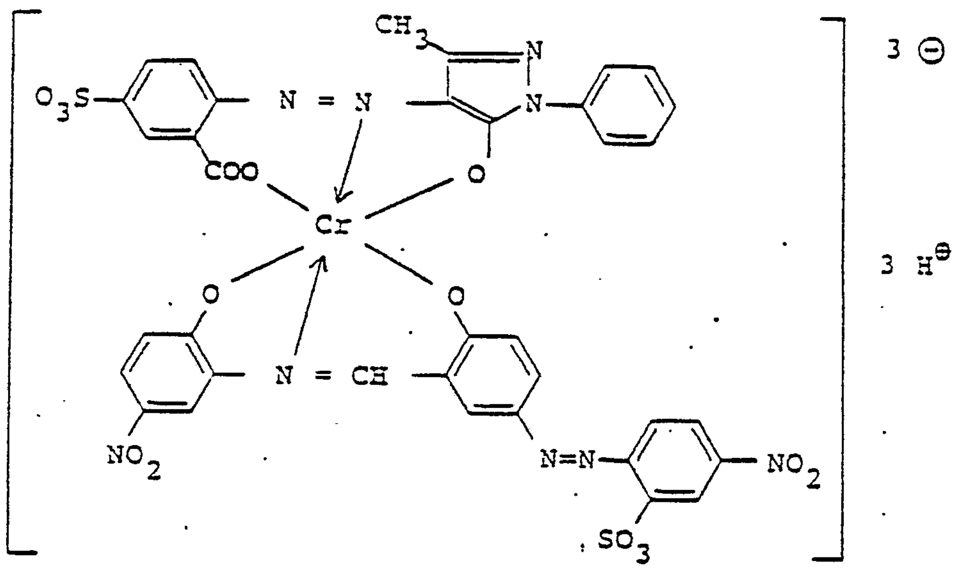

5. Farbstoff gemäß Anspruch 1 der Formel

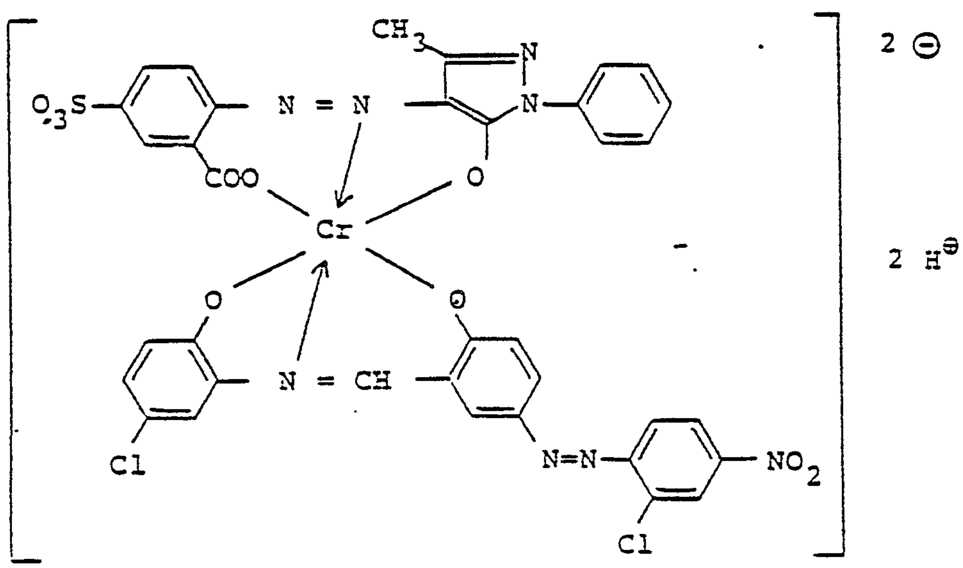

6. Farbstoff gemäß Anspruch 1 der Formel

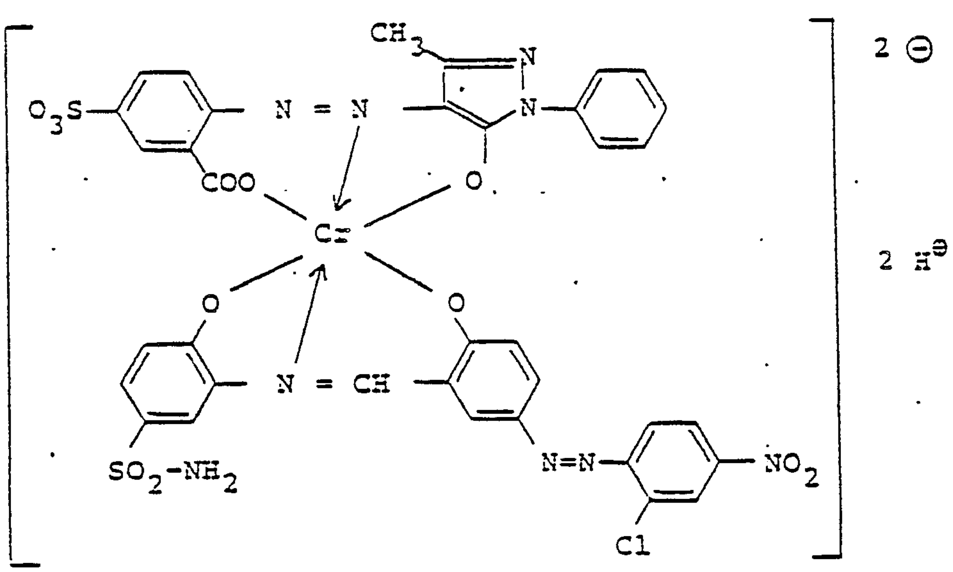

7. Farbstoff gemäß Anspruch 1 der Formel

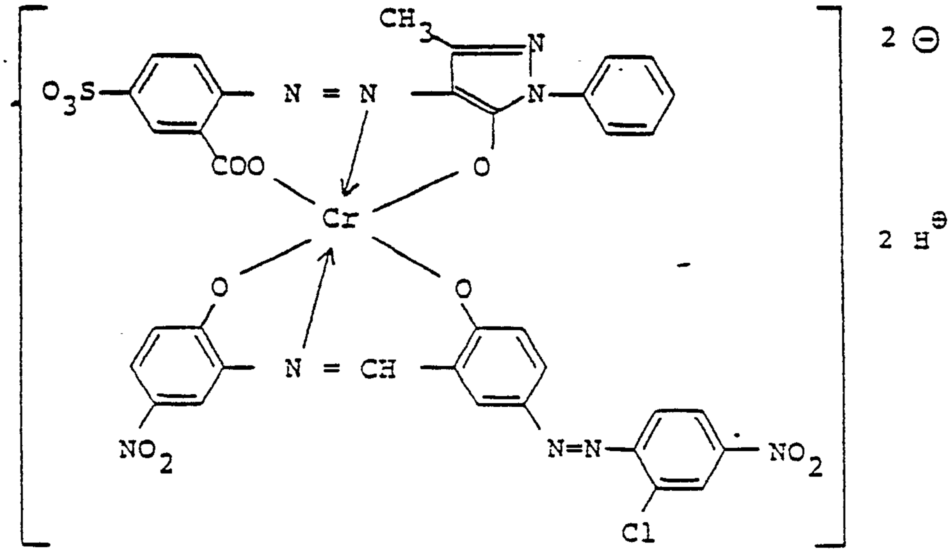

8. Verfahren zur Herstellung von Farbstoffen gemäß Anspruch 1, dadurch gekennzeichnet, daß man einen Farbstoff der Formel

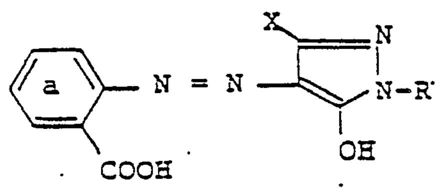

(IV)

oder

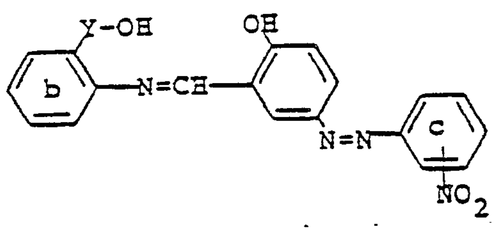

mit einem chromabgebenden Mittel in den 1 : 1-Chromkomplex überführt und diesen mit dem entsprechenden nichtmetallisierten Farbstoff der Formel (V) bzw. (IV) umsetzt.

9. Verwendung der Farbstoffe gemäß Anspruch 1 zum Färben von stickstoffhaltigen Fasermaterialien, insbesondere Leder.

**Claims**

1. Chromium complex dyestuffs which, in the form of the free acid, correspond to the formula

(See formula page 20)

wherein

X denotes optionally substituted alkyl, aryl or carbamoyl,

R denotes optionally substituted alkyl or aryl or hydrogen,

Y denotes CO or a direct bond,

ring a can be substituted either by $SO_3H$ or by $NO_2$,

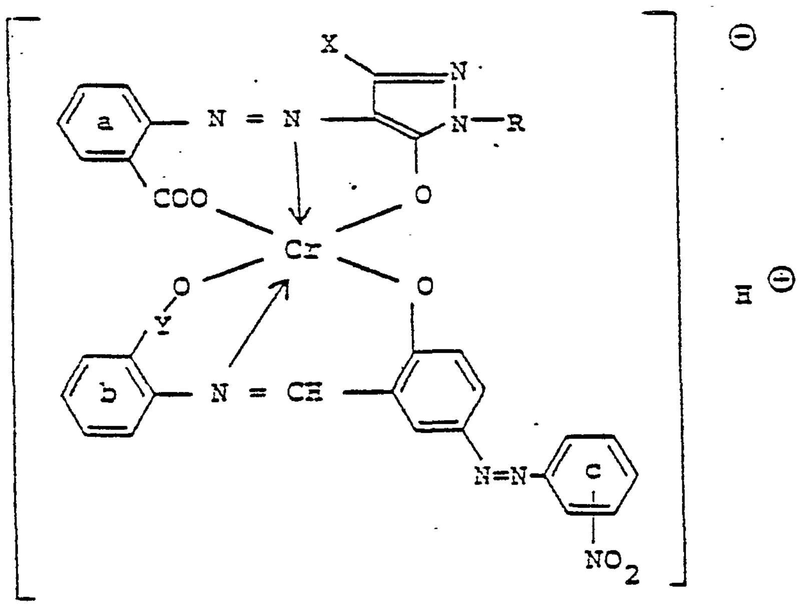

ring b can be substituted by $SO_3H$, COOH, sulphamoyl, carbamoyl, alkylsulphonyl, arylsulphonyl, $NO_2$, alkyl, alkoxy, Br, Cl or acylamino,

ring c can be substituted by $SO_3H$, COOH, sulphamoyl, carbamoyl, alkyl, trifluoromethyl, alkoxy, alkylsulphonyl, $NH_2$, $NO_2$, Cl or Br,

and wherein the nitro group of ring c is in the o- or p-position to the azo bridge.

2. Dyestuffs according to Claim 1 of the formula

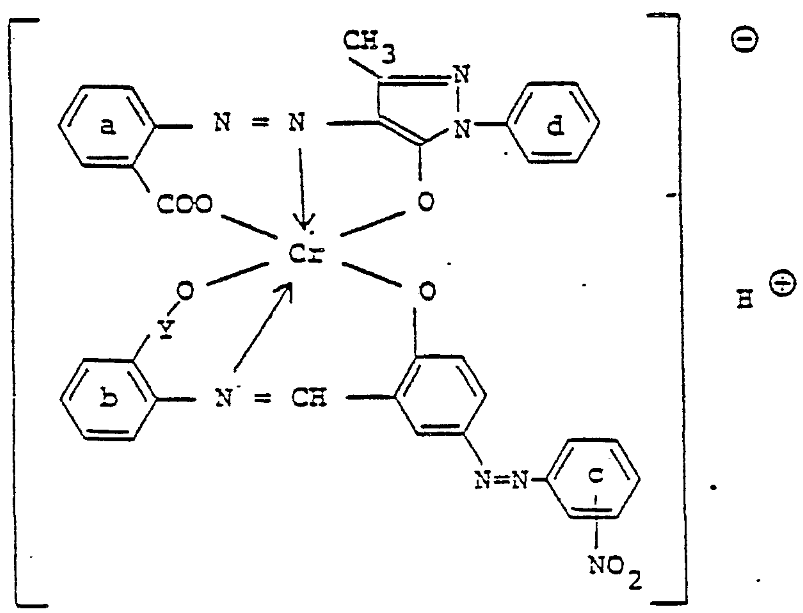

wherein

Y has the meaning given in Claim 1 and

ring a can be substituted either by $SO_3H$ or by $NO_2$,

ring b can be substituted by $SO_3H$, sulphamoyl, Cl, $NO_2$ or $CH_3$ and

ring d can be substituted by $SO_3H$, sulphamoyl, Cl, $CH_3$ or $OCH_3$.

3. Dyestuffs according to Claim 1 of the formula

(See formula page 21)

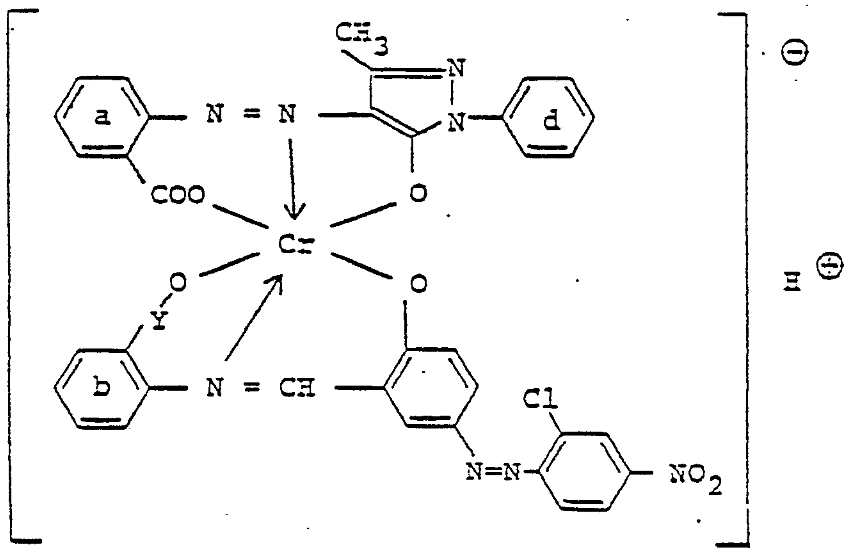

wherein the rings a, b and d can be substituted as mentioned in Claim 2.

4. Dyestuff according to Claim 1 of the formula

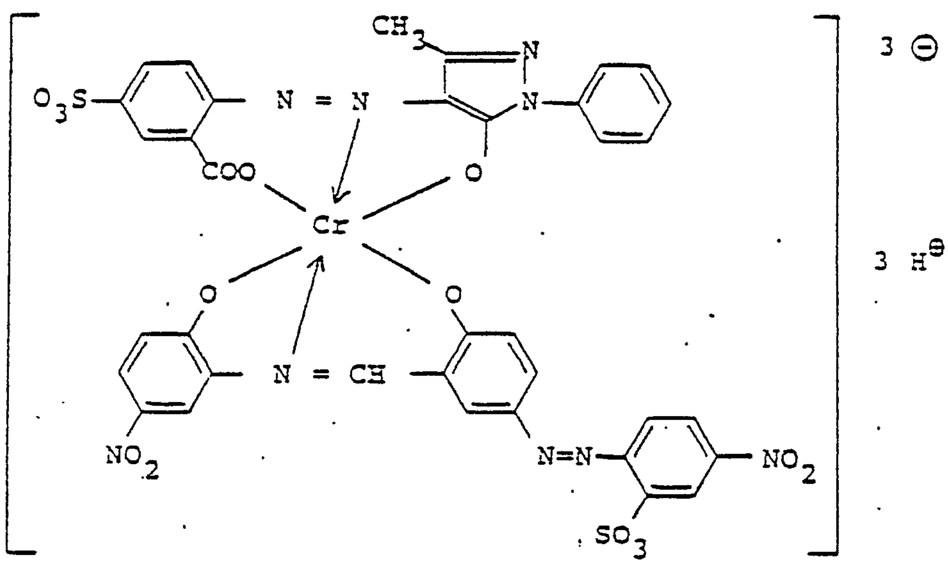

5. Dyestuff according to Claim 1 of the formula

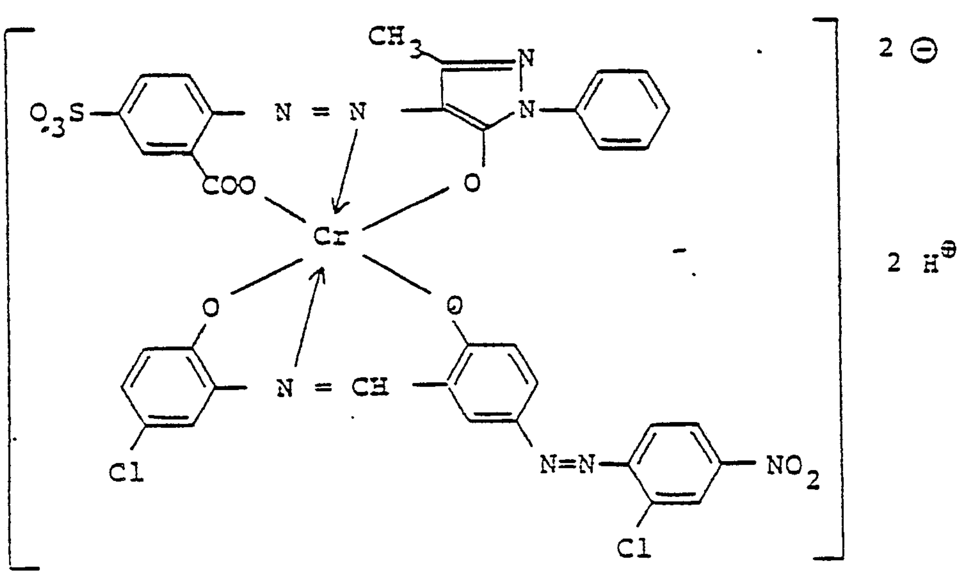

6. Dyestuff according to Claim 1 of the formula

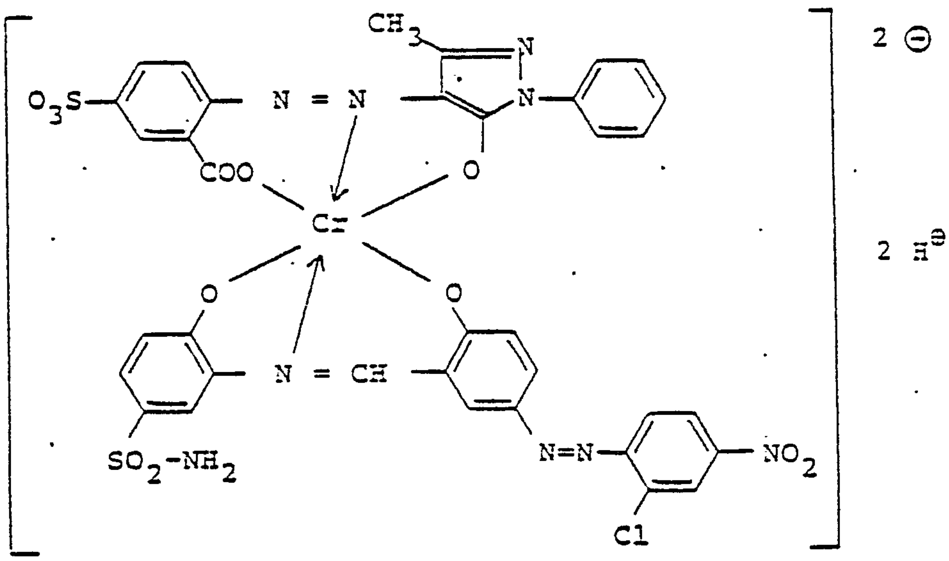

7. Dyestuff according to Claim 1 of the formula

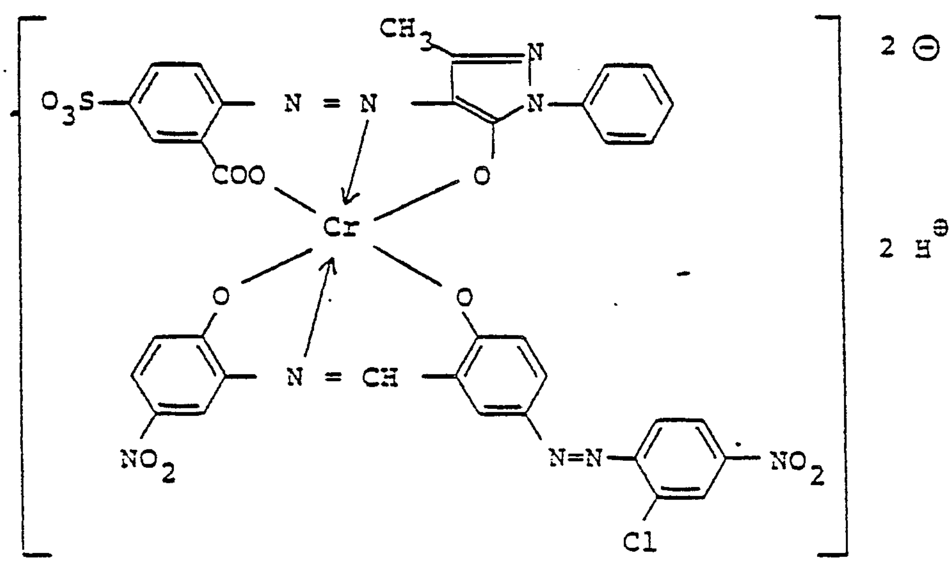

8. Process for the preparation of dyestuffs according to Claim 1, characterised in that a dyestuff of the formula

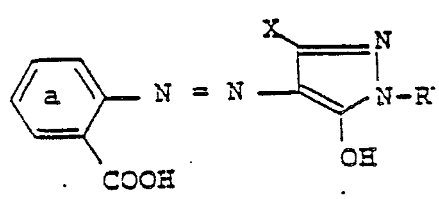

(IV)

or

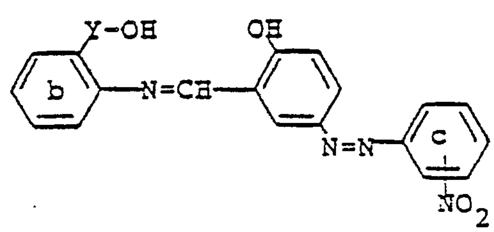

is converted with a chromium-donating agent into the 1 : 1 chromium complex and the latter is reacted with the corresponding non-metallised dyestuff of the formula (V) or (IV) respectively.

9. Use of the dyestuffs according to Claim 1 for dyeing nitrogen-containing fibre materials, in particular leather.

**Revendications**

1. Colorants de complexes de chrome qui, à l'état d'acides libres, répondent à la formule :

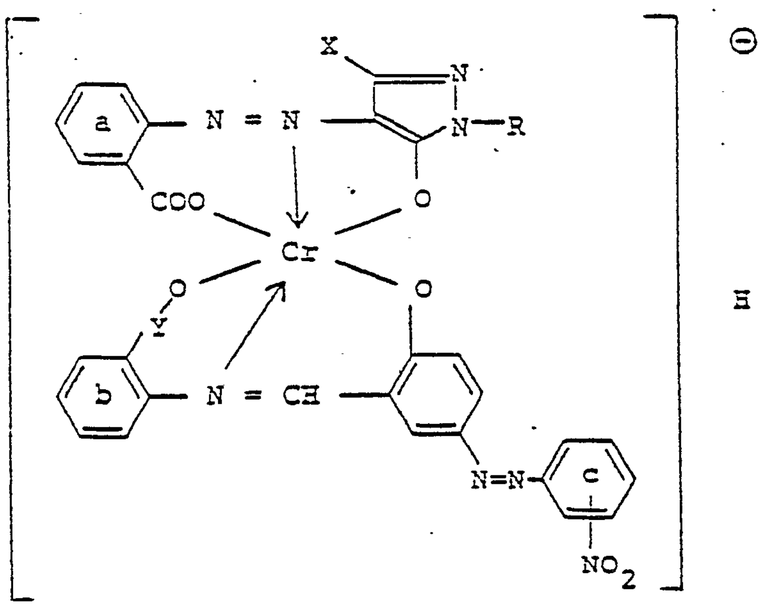

dans laquelle :

X = alkyle, aryle ou carbamoyle éventuellement substitué,

R = alkyle ou aryle éventuellement substitué ou hydrogène,

Y représente CO ou une liaison directe,

le cycle a peut être substitué par $SO_3H$ ou par $NO_2$,

le cycle b peut être substitué par $SO_3H$, COOH, sulfamoyle, carbamoyle, alkylsulfonyle, arylsulfonyle, $NO_2$, alkyle, alcoxy, Br, Cl ou acylamino,

le cycle c peut être substitué par $SO_3H$, COOH, sulfamoyle, carbamoyle, alkyle, trifluorométhyle, alcoxy, alkylsulfonyle, $NH_2$, $NO_2$, Cl ou Br,

et le groupe nitro du cycle c est en position ortho ou para par rapport au pont azo.

2. Colorants selon la revendication 1, de formule :

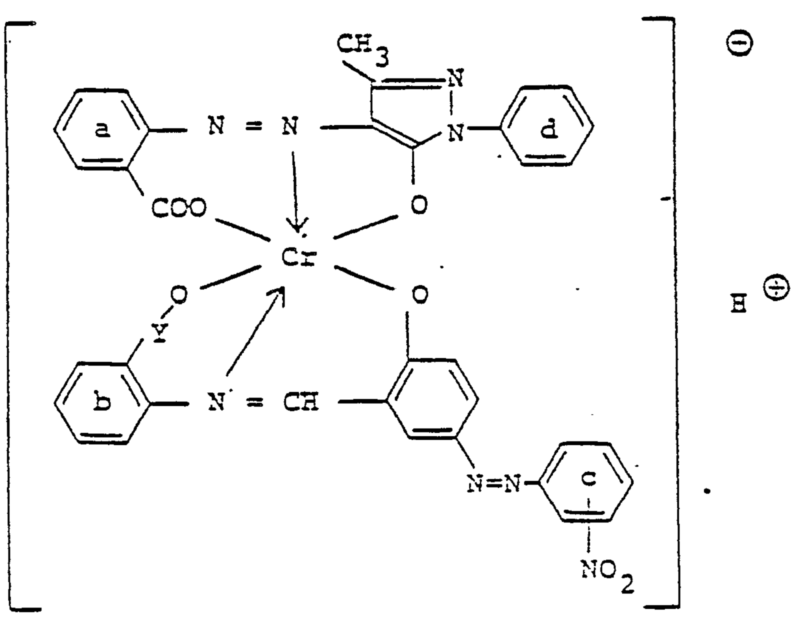

dans laquelle

Y a les significations indiquées dans la revendication 1 et,

le cycle a peut être substitué par $SO_3H$ ou $NO_2$,

le cycle b peut être substitué par $SO_3H$, sulfamoyle, Cl, $NO_2$ ou $CH_3$ et,

le cycle d peut être substitué par $SO_3H$, sulfamoyle, Cl, $CH_3$ ou $OCH_3$.

3. Colorants selon la revendication 1, de formule :

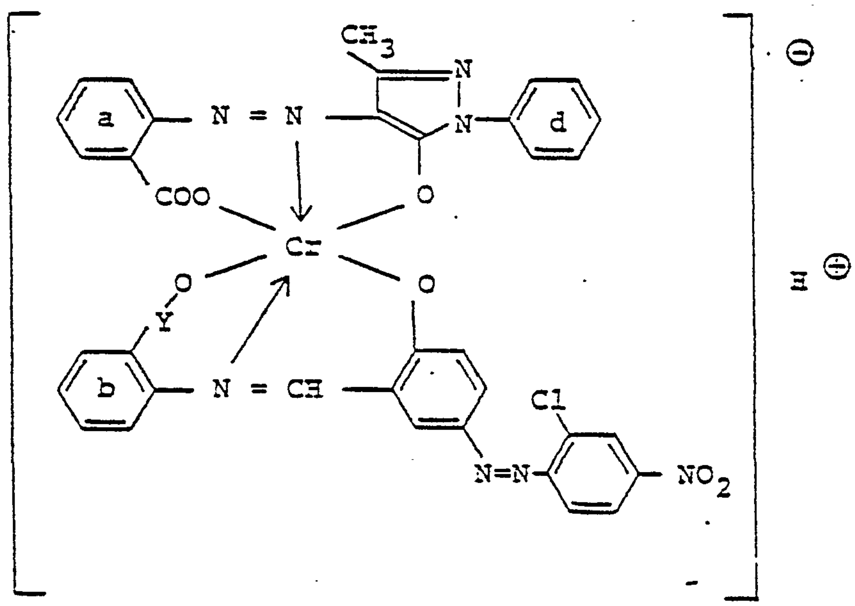

dans laquelle les cycles a, b et d peuvent être substitués comme indiqué dans la revendication 2.

4. Colorants selon la revendication 1, de formule :

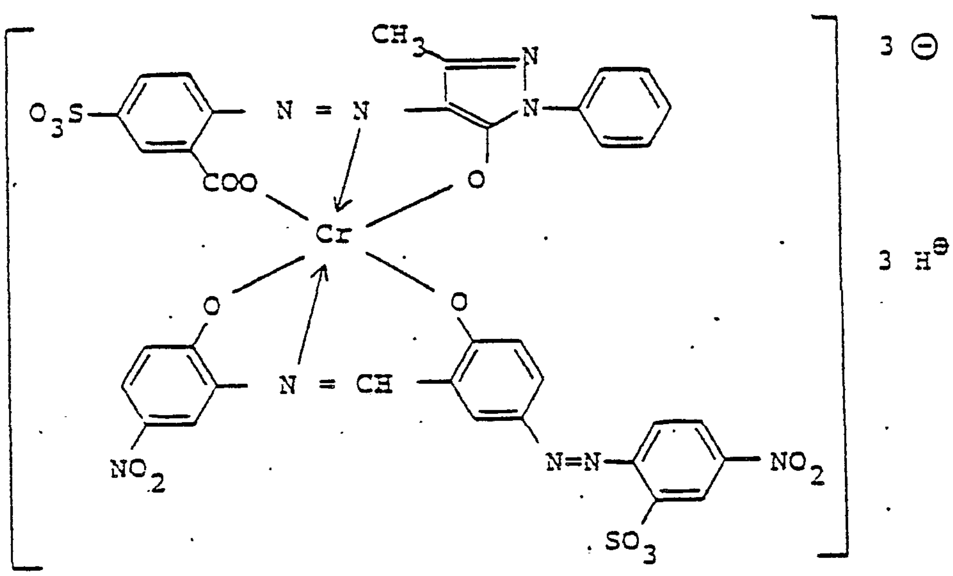

5. Colorants selon la revendication 1, de formule :

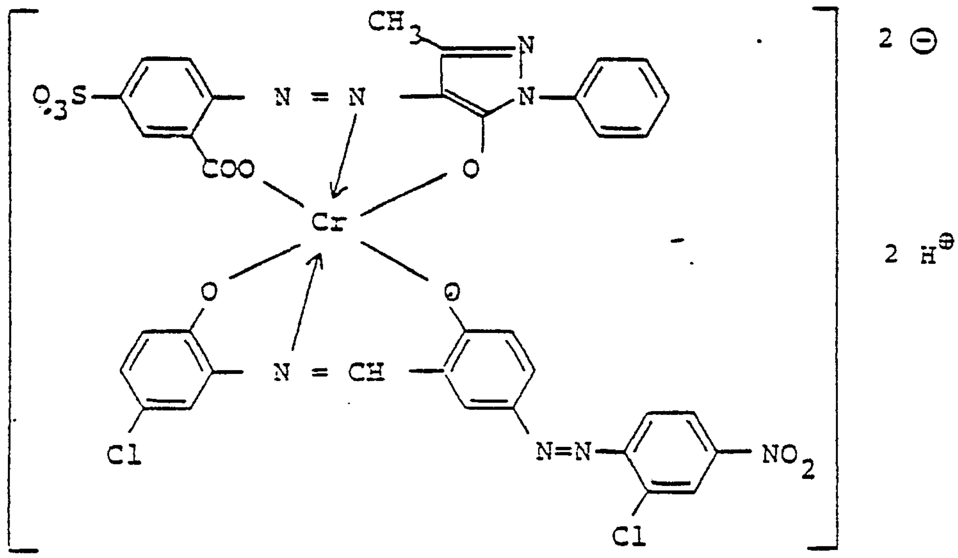

6. Colorants selon la revendication 1, de formule :

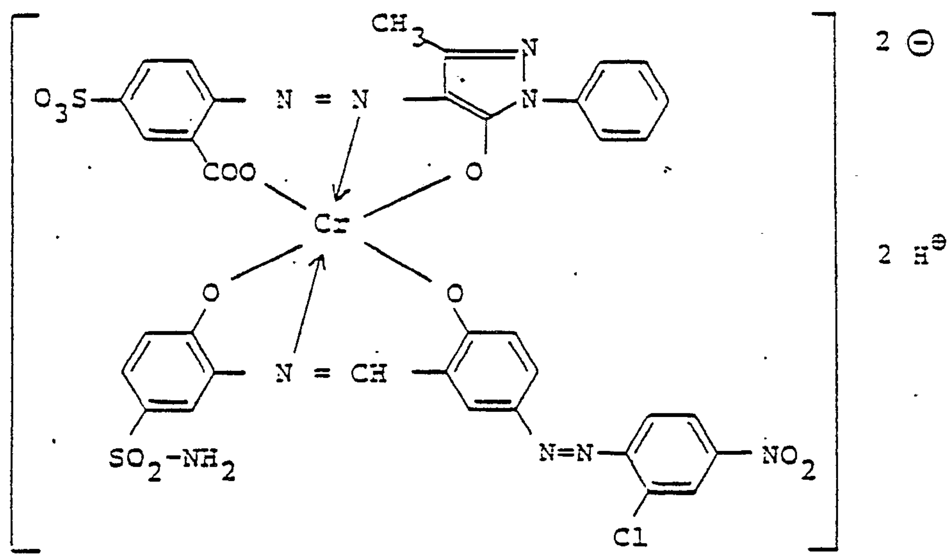

7. Colorant selon la revendication 1, de formule :

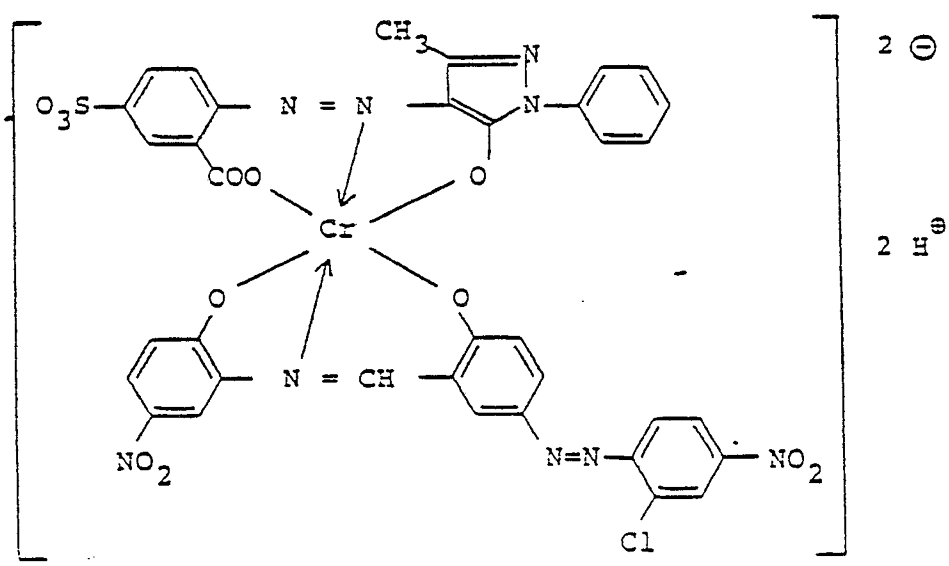

8. Procédé de préparation des colorants selon la revendication 1, caractérisé en ce que l'on convertit un colorant de formule :

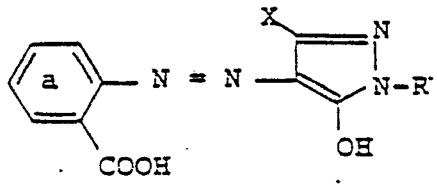

(IV)

ou

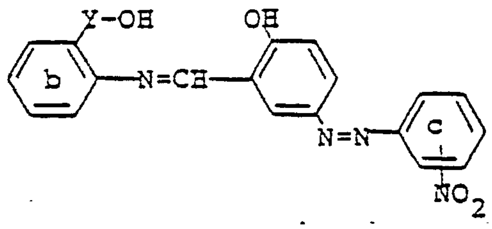

en le complexe de chrome 1 : 1 à l'aide d'un agent fournissant du chrome et on fait réagir le complexe de chrome 1 : 1 avec le colorant correspondant non métallisé de formule V ou IV respectivement.

9. Utilisation des colorants selon la revendication 1 pour la teinture de matières fibreuses azotées, en particulier du cuir.